# EUROPEAN PATENT APPLICATION

(11) **EP 4 814 678 A1**
(43) Date of publication of application: **30.09.2026**
(21) Application number: 25745366.2
(22) Date of filing: 23.01.2025
(51) Int. Cl.: G06F 3/0484, G06F 3/0481, G06F 3/01, G06F 3/00, G06F 1/16, G06T 19/00

(54) **WEARABLE DEVICE, METHOD, AND STORAGE MEDIUM FOR DISPLAYING CONTENT**

(30) Priority: 26.01.2024 KR 20240012374; 20.03.2024 KR 20240038404; 16.05.2024 KR 20240064128
(71) Applicant: Samsung Electronics Co., Ltd., Suwon-si, Gyeonggi-do 16677 (KR)
(72) Inventor: KIM, Sooryuh, Suwon-si, Gyeonggi-do 16677 (KR); SEO, Hoyoung, Suwon-si, Gyeonggi-do 16677 (KR); KIM, Woohyun, Suwon-si, Gyeonggi-do 16677 (KR)
(74) Representative: HGF
(86) International application number: PCT/KR2025/001351
(87) International publication number: WO 2025/159543

(57) **Abstract**

Provided are a wearable device, a method, and a storage medium for displaying content. The wearable device comprises: a display; at least one processor including a processing circuit; and a memory storing instructions that are individually or collectively executed by the at least one processor. The at least one processor may be configured to individually or collectively execute the stored instructions and cause the wearable device to determine the usage environment of the wearable device displaying content. The at least one processor is configured to cause the wearable device to generate a boundary on the basis of at least one of the number of pieces of content or the usage environment. The at least one processor is configured to cause the wearable device to display, through the display, content arranged on the basis of the shape of the boundary. The boundary includes an area set in advance on the basis of the user wearing the wearable device or the wearable device, displays the content on the surface of the boundary, and includes a virtual space in which content including a lock attribute is moved on the surface according to the posture of the user.

## Description

### [Technical Field]

The disclosure relates to a wearable device, a method, and a non-transitory computer-readable recording medium and, for example, to a wearable device, a method, and a non-transitory computer-readable recording medium for displaying content.

### [Background Art]

Wearable devices are devices worn on a user's body to execute a function. For example, a wearable device may be a head mounted display (HMD), glasses, a watch, a bracelet, or a ring. An HMD may include a display and display content on the display. The HMD may move the content in response to a user's direction switching or movement so as to make the user experience three-dimensional and realistic content. A glasses-type device may include a transparent display. The glasses-type device may recognize an external object seen through the transparent display, and display additional information on the recognized object on the transparent display. For example, the glasses-type device may display a generated virtual object on the transparent display.

The above-described information may be presented as related art simply for the purpose of assisting in understanding the disclosure. No assertion is made whether the foregoing might be asserted as prior art relevant to the disclosure.

### [Disclosure of Invention]

### [Solution to Problem]

A wearable device according to various example embodiments disclosed herein may include: a display, at least one processor, comprising processing circuitry, and a memory storing instructions that, when executed by the at least one processor individually or collectively, may cause the wearable device to: determine a usage environment of the wearable device displaying content; generate a boundary, based on at least one of the number of contents and the usage environment; and display, through the display, the content placed based on a shape of the boundary; wherein boundary may be a virtual space which includes a specified area surrounding at least a part of a user or the wearable device based on the user wearing the wearable device or the wearable device, in which the content is displayed on a surface of the boundary, and the content including a lock attribute is moved on the surface according to the user's posture.

A method of displaying content in a wearable device according to various example embodiments disclosed herein may include: determining a usage environment of the wearable device displaying content; generating a boundary, based on at least one of the number of contents and the usage environment; and displaying the content placed based on a shape of the boundary; wherein the boundary may be a virtual space which includes a specified area surrounding at least a part of a user or the wearable device based on the user wearing the wearable device or the wearable device, in which the content is displayed on a surface of the boundary, and the content including a lock attribute is moved on the surface according to the user's posture.

A non-transitory computer-readable recording medium having, recorded thereon, a program for performing a method of displaying content in a wearable device according to various example embodiments disclosed herein may perform an operation of: determining a usage environment of the wearable device displaying content; generating a boundary, based on at least one of the number of contents and the usage environment; and displaying the content placed based on a shape of the boundary; wherein the boundary may be a virtual space which includes a specified area surrounding at least a part of a user or the wearable device based on the user wearing the wearable device or the wearable device, in which the content is displayed on a surface of the boundary, and the content including a lock attribute is moved on the surface according to the user's posture.

### [Brief Description of Drawings]

The above and other aspects, features and advantages of certain embodiments of the present disclosure will be more apparent from the following detailed description, taken in conjunction with the accompanying drawings, in which:
FIG. 1 is a block diagram illustrating an example electronic device in a network environment according to various embodiments;
FIG. 2 is a block diagram illustrating an example configuration of a wearable device according to various embodiments;
FIG. 3 is a flowchart illustrating an example operation of adjusting content according to a user's position according to various embodiments;
FIGS. 4A and 4B are flowcharts illustrating an example operation of generating a boundary according to various embodiments;
FIGS. 5A, 5B, and 5C are diagrams illustrating an example boundary according to various embodiments;
FIG. 6 is a flowchart illustrating an example operation of placing content in content according to various embodiments;
FIG. 7 is a diagram illustrating an example guardian area according to various embodiments;
FIG. 8 is a diagram illustrating a screen in which content is placed according to various embodiments;
FIG. 9 is a diagram illustrating a lock attribute of content according to various embodiments;
FIGS. 10A and 10B are diagrams illustrating an example content displayed based on an attribute in response to a user's direction switching according to various embodiments;
FIGS. 11A, 11B, and 11C are diagrams illustrating content displayed according to a user's posture and gaze direction according to various embodiments;
FIG. 12 is a diagram illustrating content displayed according to a user's posture according to various embodiments;
FIG. 13 is a diagram illustrating content displayed according to a user's repeated posture according to various embodiments;
FIGS. 14A, 14B, and 14C are diagrams illustrating content displayed on a boundary according to various embodiments;
FIG. 15 is a diagram illustrating content displayed on a cuboidal boundary according to various embodiments;
FIGS. 16A, 16B, and 16C are diagrams illustrating content displayed according to a change of a boundary according to various embodiments;
FIGS. 17A and FIG. 17B are diagrams illustrating an offset of a virtual space according to various embodiments;
FIGS. 18A, 18B, and 18C are diagrams illustrating an example operation of a wearable device when a user's position and/or gaze direction is moved according to various embodiments; and
FIG. 19 is a flowchart illustrating an example method of displaying content according to various embodiments.

### [Mode for the Invention]

Hereinafter, various example embodiments of the disclosure will be described in greater detail with reference to the drawings. However, the disclosure may be implemented in various forms and is not limited to the various example embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

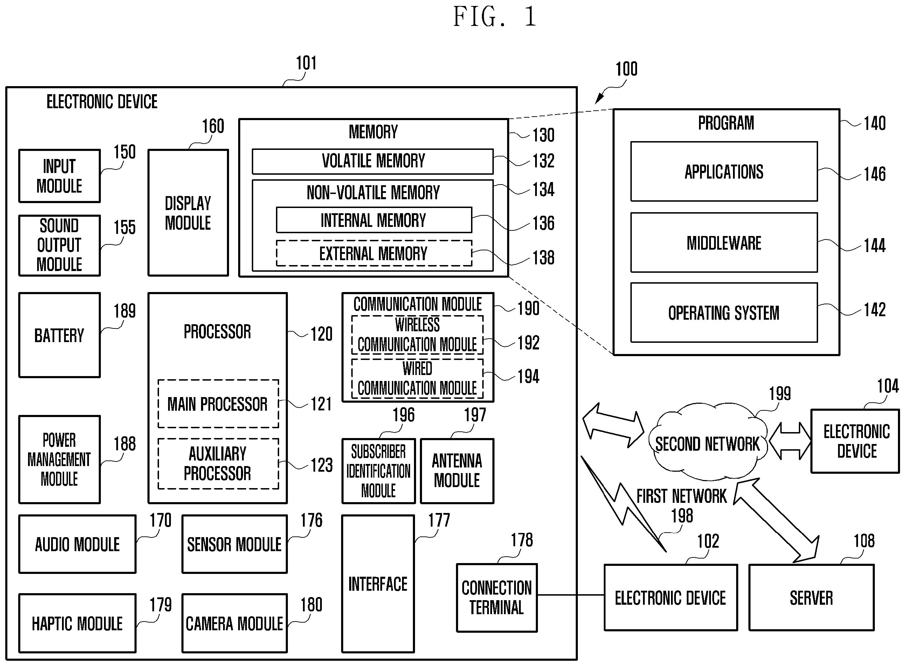

FIG. 1 is a block diagram illustrating an example electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In various examples, at least one of the components (e.g., the connection terminal 178) may be omitted from the electronic device 101, or one or more other components may be added in the electronic device 101. In various examples, some of the components (e.g., the sensor module 176, the camera module 180, or the antenna module 197) may be implemented as a single component (e.g., the display module 160).

The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element including a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

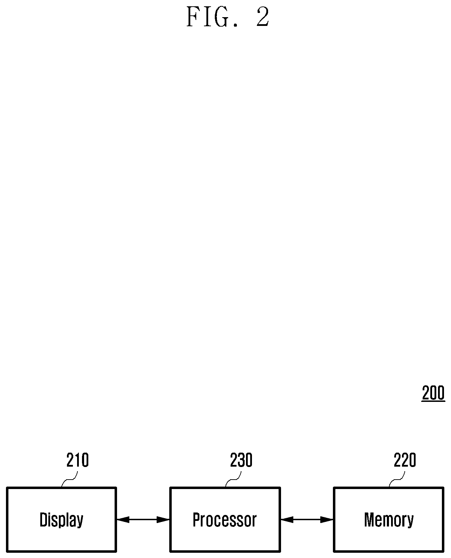

FIG. 2 is a block diagram illustrating an example configuration of a wearable device according to various embodiments.

Referring to FIG. 2, a wearable device 200 may include a display 210, a memory 220, and a processor (e.g., including processing circuitry) 230.

The display 210 (e.g., the display module 160 in FIG. 1) may display content. For example, the display 210 may be implemented as a normal display (e.g., a liquid crystal display (LCD) or an organic light emitting diode (OLED)) or a transparent display. For example, the wearable device 200 (e.g., the electronic device 101 in FIG. 1) may include a transparent display and a camera (e.g., the camera module 180 in FIG. 1). The wearable device 200 may recognize, using the camera, actual content (e.g., a desk, furniture, a frame, etc. in a room that is a physical environment) seen to a user through the transparent display. The wearable device 200 may display virtual content on the transparent display in consideration of the recognized actual content, thereby implementing an augmented reality (AR) environment. For example, the wearable device 200 may include a normal display. The wearable device 200 may display generated content on the normal display, thereby implementing a virtual reality (VR) environment. For example, the wearable device 200 may further include a camera. The wearable device 200 may capture an image of a surrounding environment using the camera. The wearable device 200 may recognize actual content from the captured image, and display the captured image on the normal display. Then, the wearable device 200 may display virtual content on the transparent display in consideration of the recognized actual content, thereby implementing an AR environment.

The memory 220 (e.g., the memory 130 in FIG. 1) may store data, algorithms, programs, instructions, etc. for performing a function of the wearable device 200. The instructions, etc. stored in the memory 220 may be loaded to the processor 230 and executed by the processor 230.

The processor 230 (e.g., the processor 120 in FIG. 1) may include various processing circuitry and control each element of the wearable device 200. The wearable device 200 may include one or multiple processors 230. For example, the processor 230 may correspond to multiple processors that collectively perform multiple functions distributed therebetween. The processor 230 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

For example, the processor 230 may determine a usage environment of the wearable device 200 displaying content. For example, the usage environment may include a VR environment, an AR environment, an extended reality (XR) environment, and/or a mixed reality (MR). For example, the XR environment and the MR environment may be similar to a VR environment if the environments are implemented based on virtual content, and may be similar to an AR environment if the environments are implemented based on a physical environment (or physical image) and virtual content. For example, if the wearable device 200 displays only virtual content, the usage environment of the wearable device 200 may be a VR environment (or XR environment, or MR environment). If the wearable device 200 displays content including virtual content and actual content, the usage environment of the wearable device 200 may be an AR environment (or XR or MR environment). The description in the disclosure is given mainly for a VR environment and an AR environment.

The processor 230 may generate a boundary, based on at least one of the number of contents and a usage environment. For example, the usage environment of the wearable device 200 may include various contents. For example, the contents may include content generated as an image although the content does not exist in real in a surrounding environment, and/or content existing in the surrounding environment. Contents generated as an image although the content does not exist in the real world may include normal content (e.g., a frame, a window, a desk, etc.) and/or content related a task (e.g., a task window, a bar related to a task, a pop-up, etc.). The processor 230 may configure content to have an environment-related attribute (or background attribute) or a task-related attribute, based on relevance to a task. For example, the processor 230 may configure the attribute of content, based on a feature of the content, a user's usage pattern, and/or a user's command. For example, the processor 230 may configure a frame and a window having a low relevance to a task to have the environment-related attribute, and configure a desk having a high relevance to a task to have the task-related attribute. For example, the processor 230 may avoid content including the environment-related attribute and display virtual content. The processor 230 may display virtual content at a location other than a location where content including environment-related attribute is displayed. For example, the processor 230 may display virtual content anchoring same to content including the task-related attribute. The processor 230 may display virtual content by relating it to content including task-related attribute within or around the content including task-related attribute. The content may be called an object, a window, a task, and/or a component.

For example, content may include a lock attribute. The lock attribute may include a user lock (body lock) attribute or an environment lock (or world lock) attribute related to a target subject to anchoring. For example, the processor 230 may anchor content including the user lock attribute with respect to a user, and anchor content including the environment lock attribute with respect to an environment (or background). For example, an environment (or background, screen) shown to a user may change according to a user's movement (e.g., movement of the face or neck of a user wearing the wearable device). For example, even if the shown environment changes, the processor 230 may maintain the position of content including the user lock attribute with respect to the user. The content including the user lock attribute may be fixed to the user (e.g., the direction of the user's gaze, the direction of the viewing angle). The direction of the user's gaze and/or viewing angle looking at the content including the user lock attribute may be maintained regardless of the change in the environment shown to the user. In other words, the processor 230 may move the position of the content including the user lock attribute with respect to the environment. For example, in case that the shown environment changes, the processor 230 may change the position of the content including the environment lock attribute displayed on the display 210 with respect to the user according to the change in the shown environment. In other words, the content including the environment lock attribute may be fixed to the environment. The direction of the user's gaze and/or viewing angle while viewing content including the environment lock attribute may change according to a change in the environment (or background, screen) shown to the user. In other words, the processor 230 may maintain the position of the content including the environment lock attribute based on the environment.

For example, the lock attribute (e.g., user lock attribute or environment lock attribute) may be configured by a user or may be automatically configured by the processor 230. The processor 230 may automatically configure the lock attribute of content among contents used (or activated or executed) in the wearable device 200, based on the distance to a user (or the wearable device 200), a usage frequency, whether the content has been used recently, the user's preference, etc. For example, the processor 230 may configure, to have the user lock attribute, control content, content in operation, a frequently used content determined based on a user's usage pattern, content configured by the user, and/or notification-related content among contents. Then, the processor 230 may configure the remaining contents to have the environment lock attribute. For example, the processor 230 may configure a recently used (or activated) content (or content having been used within a pre-configured time) to have the user lock attribute. For example, the processor 230 may configure, to have the user lock attribute, content including a history of recent usage among contents positioned within a predetermined distance (e.g., short distance) from the wearable device 200. For example the processor 230 may configure a frequently used content (or content having been used/activated a pre-configured number of times or more or content having been used/activated a pre-configured number of times or more within a pre-configured time) to have the user lock attribute. For example, the processor 230 may configure a recently and/or frequently used content of the environment lock attribute to have the environment lock attribute.

For example, a boundary may be a virtual space including a pre-configured (e.g., specified) shape and area. For example, a boundary may have a shape of a cuboid, a cylinder, a capsule, a sphere, and/or a semi-sphere. A boundary may include a pre-configured area surrounding at least a part of a user or the wearable device 200 based on the user wearing the wearable device or the wearable device, and display content (or an object, a window, a task or a component) in a predetermined area with respect to the surface of the boundary. For example, in case that the surface of the boundary is located at a distance of about 1 m in radius from a user wearing the wearable device 200 (or, the wearable device 200), the processor 230 may display content in an area of about 0.9 m to about 1.1 m in radius from the user wearing the wearable device 200.

For example, if the usage environment of the wearable device 200 is an AR environment and a plane is detected in a real environment, the processor 230 may generate a cuboidal boundary. For example, if a user wearing the wearable device 200 uses the wearable device 200 in an AR environment in a room, the processor 230 may detect a wall surface in the room. The wall surface in the room is a plane, and thus the processor 230 may generate a cuboidal boundary. For example, if the usage environment of the wearable device 200 is a VR environment and the number of contents (e.g., content related a task) is equal to or smaller than a pre-configured first number, the processor 230 may generate a cylindrical boundary, and if the number of contents exceeds the pre-configured first number, the processor 230 may generate a capsular boundary. For example, the pre-configured first number may be 1. A user wearing the wearable device 200 uses the wearable device 200 in a VR environment, and may execute one task. The processor 200 may display the task being executed on the display 210 using a shape of a window. The usage environment of the wearable device 200 is a VR environment and the number of contents displayed on the display 210 is 1, and thus the processor 230 may generate a cylindrical boundary. For example, the wearable device 200 may display first content (e.g., a task window) and second content (e.g., a state bar) on the display 210. The usage environment of the wearable device 200 is a VR environment and the number of contents displayed on the display 210 exceeds 1, and thus the processor 230 may generate a capsular boundary.

The processor 230 may display content placed based on the shape of a boundary through the display 210. For example, the processor 230 may display (or place) content, based on the positions and attribute of other content. For example, if the usage environment of the wearable device 200 is a VR environment, the processor 230 may determine the attribute of content, as the task-related attribute or the environment-related attribute. For example, content may include normal content (e.g., a frame, a window, a desk, etc.) and/or content related a task (e.g., a task window, a bar related to a task, a pop-up, etc.). The processor 230 may determine the normal content to have the environment-related attribute (or background attribute) or the task-related attribute, based on relevance to the content related a task.

For example, the processor 230 may display (or place) content related a task to avoid normal content determined to have (or including) the environment-related attribute. The processor 230 may anchor content related a task to normal content determined to have (or including) the task-related attribute, and display (or place) the anchored content related a task. For example, normal content may include a bed and a desk, and content related a task may include a window and a control bar. The bed is content related to a background, and the desk may be content related to a background and a task. The processor 230 may determine (or configure) the bed to have the environment-related attribute, and determine (or configure) the desk to have the task-related attribute. The processor 230 may display the window to avoid the bed, and anchor the control bar to the desk and display the anchored control bar. For example, if a generated boundary is a cuboidal boundary, the processor 230 may change the size of content related a task to display the content related a task in an area of one surface of the cuboidal boundary. For example, if normal content is positioned on one surface of a cuboidal boundary, the processor 230 may change the size of content related a task to display the content related task in a partial area of one surface of the cuboidal boundary so that the content related a task avoids the normal content.

For example, the processor 230 may display content in a predetermined area including the surface of a boundary, and move the content near the surface of the boundary (in an area including the surface of the boundary), based on a user's posture, movement of a gaze direction, and the lock attribute of the content. For example, the wearable device 200 may include a sensor (e.g., the sensor module 176 in FIG. 1). The processor 230 may determine a user's posture and/or gaze direction, based on a signal detected in the sensor. For example, the sensor may include a gyro sensor, an acceleration sensor, or a camera.

The processor 230 may display content on a position corresponding to a user's posture. For example, if the posture of a user is a standing posture, the processor 230 may display content on a first position corresponding to the standing posture, and if the posture of a user is a sitting posture, the processor 230 may display content on a second position corresponding to the sitting posture. If a first posture and a second posture as a user's posture are repeated a pre-configured number of times and/or during a pre-configured time, the processor 230 may display content on a middle position between a first position of the content corresponding to the first posture and a second position of the content corresponding to the second posture.

The wearable device 200 disclosed herein may generate in advance a boundary for displaying content, based on a usage environment and the number of contents, identify in advance a fixed content and a movable content according to the lock attribute thereof, and move the contents by group. The wearable device 200 may predict a display area of content and a target to be moved to render image frames including the content and/or content in advance.

For example, the wearable device 200 may display content using a shape corresponding to the surface of a generated boundary. The wearable device 200 may generate a boundary to determine in advance a position and a shape for displaying of content. The wearable device 200 may render in advance movable contents as a group according to the lock attribute thereof. For example, the wearable device 200 may display first content and second content including the user lock attribute and display third content and fourth content including the environment lock attribute on a front part of a cylindrical boundary, which the user faces. If a user's gaze moves sideward, the wearable device 200 may move and display the first content and the second content having a curved shape with respect to a environment (or, background). In other words, when the user's gaze moves in a lateral direction, the wearable device 200 may display the first content and the second content in a curved shape while maintaining a current position with respect to the user.

If a user's gaze moves upward or downward, the wearable device 200 may move and display the first content and the second content having a planar shape with respect to the background. The wearable device 200 may group the first content and the second content, and render the first content and the second content having a curved shape in advance. The wearable device 200 may render the first content and the second content having a planar shape in advance. For example, if a user's gaze moves sideward, the wearable device 200 may display an image corresponding to a changed viewing angle, and display the pre-rendered first content and second content having a curved shape on the displayed image. For example, if a user's gaze moves upward, the wearable device 200 may display an image corresponding to a changed viewing angle, and display the pre-rendered first content and second content having a planar shape on the displayed image. For example, the third content and the fourth content including the environment lock attribute may be fixed to the environment. The wearable device 200 may display at least a part of the third content and the fourth content while maintaining the current position relative to the environment. In other words, the wearable device 200 may display at least a part of the third content and the fourth content by moving it relative to the user according to the changed viewing angle.

Accordingly, the wearable device 200 disclosed herein may reduce the load of the processor 230, and display a naturally continuing image on a moved position according to a user's movement, gaze movement, and/or usage expansion of content.

If the number of contents exceeds a pre-configured first number in an AR environment or the number of contents is changed in a VR environment, the processor 230 may change a generated boundary, based on the number of the contents. For example, the pre-configured first number may be 1. The processor 230 has generated a cuboidal boundary in an AR environment, but if the number of contents is equal to or greater than 2, the processor 230 may change the cuboidal boundary to a cylindrical boundary or a capsular boundary. For example, if the processor 230 has generated a cylindrical boundary in a VR environment, but if the number of contents is changed to be equal to or greater than 2, the processor may change the cylindrical boundary to a capsular boundary. For example, if the processor 230 has generated a capsular boundary in a VR environment, but if the number of contents is changed to 1, the processor may change the capsular boundary to a cylindrical boundary.

The processor 230 may change a shape of content displayed near the surface of a boundary according to the change of the boundary. For example, the processor 230 may display content on a curved surface of a cylindrical boundary or a capsular boundary using a curved shape. If a cylindrical boundary or a capsular boundary is changed to a cuboidal boundary or a cylindrical boundary, the processor 230 may change the shape of content displayed using a curved shape to a planar shape, and display the content having the planar shape on a plane of the cuboidal boundary or a top or bottom surface of the cylindrical boundary. For example, the processor 230 may display content on a top or bottom surface of a cuboidal boundary or a cylindrical boundary using a planar shape. If a cuboidal boundary or a cylindrical boundary is changed to a cylindrical boundary or a capsular boundary, the processor 230 may change the shape of content displayed using a planar shape to a curved shape on a curved surface of the cylindrical boundary or the capsular boundary and display the changed shape of the content. For example, when the processor 230 changes and displays the shape of content, the processor may temporarily display, on the display 210, the content to which curve has not been applied. In other words, when the processor 230 changes the shape of content from a curved shape to a planar shape or from a planar shape to a curved shape, the processor 230 may temporarily display, on the display 210, the content to which only curve has not been applied, thereby enabling a user to recognize that the shape of the content is naturally changed.

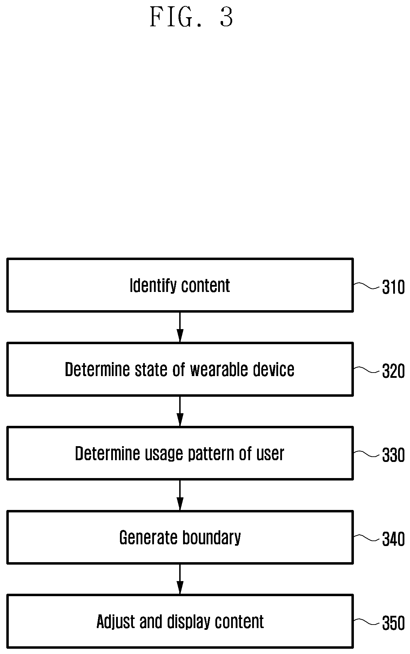

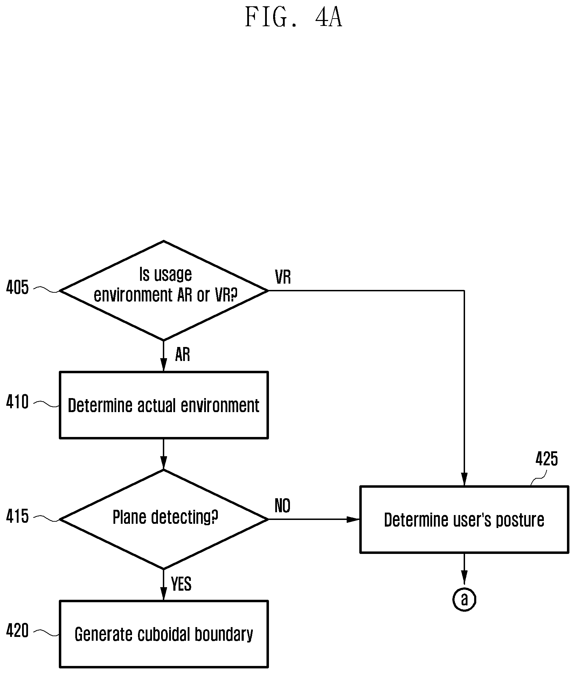

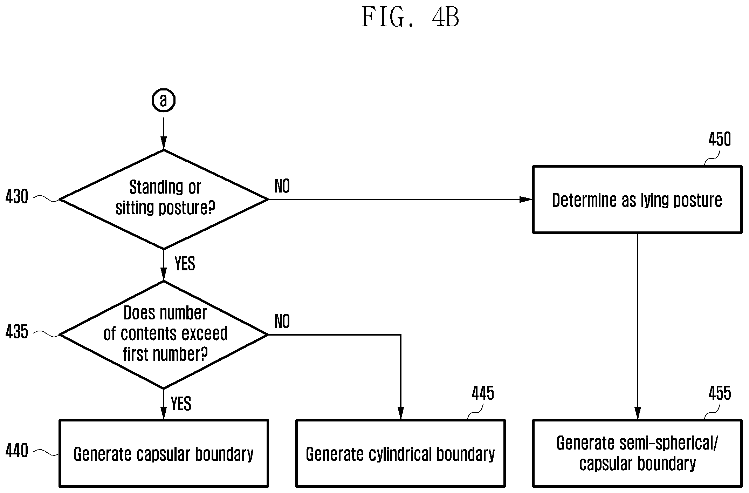

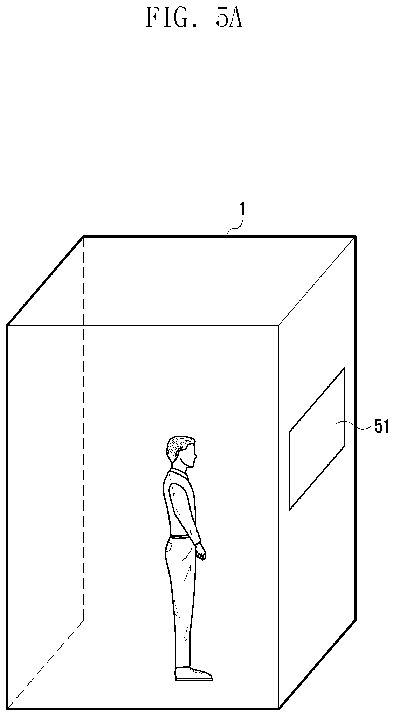

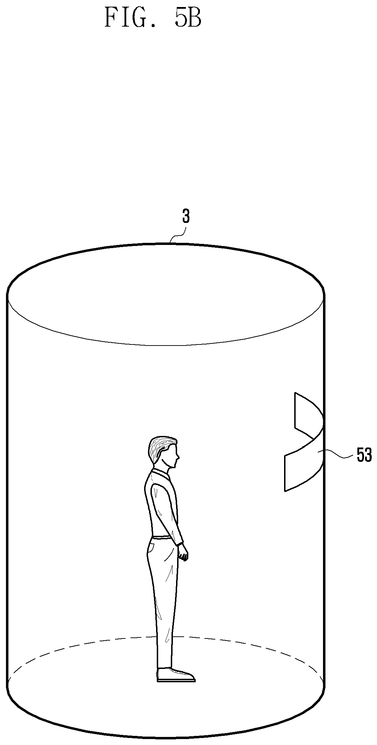

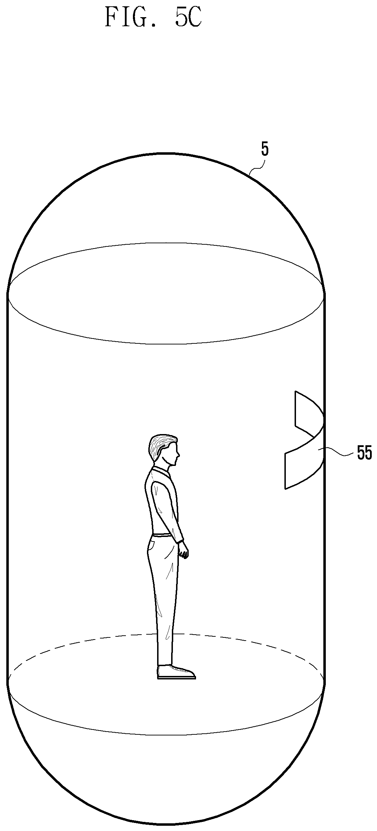

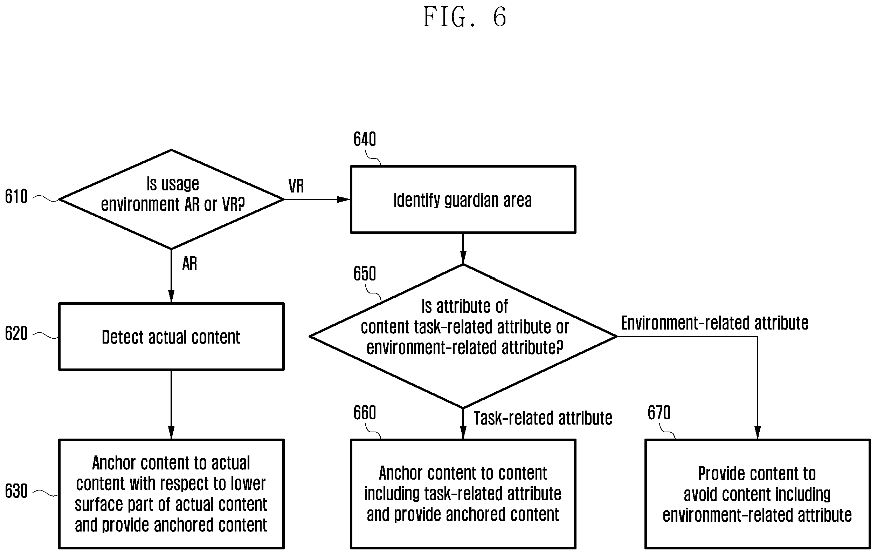

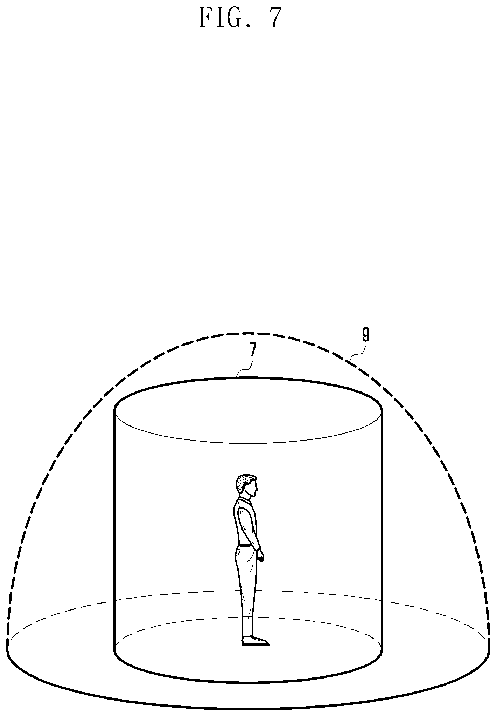

FIG. 3 is a flowchart illustrating an example operation of adjusting content according to a user's position according to various embodiments, and FIGS. 4A and 4B are flowcharts illustrating an example operation of generating a boundary according to various embodiments. FIGS. 5A, 5B, and 5C are diagrams illustrating a boundary according to various embodiments, and FIG. 6 is a flowchart illustrating an example operation of placing content according to various embodiments. FIG. 7 is a diagram illustrating an example guardian area according to various embodiments.

In the examples below, operations may be sequentially performed, but sequential performance is not necessarily required. For example, the sequence of operations may be changed, and at least two operations may be performed in parallel.

According to an embodiment, it may be understood that operation 310 to operation 350 are performed by a processor (e.g., the processor 230 in FIG. 2) of an electronic device (e.g., the electronic device 200 in FIG. 2).

Referring to FIG. 3, the wearable device 200 may identify content (operation 310). For example, the wearable device 200 may determine a size of the content, a position, an attribute, and/or the number of contents.

The wearable device 200 may determine a state of the wearable device 200 (operation 320). For example, the wearable device 200 may determine a position and/or an angle of the wearable device 200 using a sensor. The position, direction, and/or angle of the wearable device 200 may be a user's posture and/or gaze direction.

The wearable device 200 may determine a user's usage pattern (operation 330). For example, the wearable device 200 may determine previously used content corresponding to the identified content, frequently used content, the number of contents, and/or a usage posture.

The wearable device 200 may generate a boundary (operation 340), adjust and display content based on the generated boundary (operation 350). For example, when displaying content on a boundary of a plane, the wearable device 200 may display the content of the plane on the surface (or near the surface) of the boundary of the plane. When displaying content on a boundary of a curved surface, the wearable device 200 may display the content of the curved surface on the surface of the boundary of the curved surface.

Referring to FIGS. 4A and 4B, an operation of generating a boundary is described in greater detail.

In the example below, operations may be sequentially performed, but sequential performance is not necessarily required. For example, the sequence of operations may be changed, and at least two operations may be performed in parallel.

According to an embodiment, it may be understood that operation 405 to operation 455 are performed by a processor (e.g., the processor 230 in FIG. 2) of an electronic device (e.g., the electronic device 200 in FIG. 2).

Referring to FIG. 4A, a wearable device 405 may determine whether a usage environment is an AR environment or a VR environment (operation 405). For example, the AR environment is an environment in which generated content is displayed together with actual content, and the VR environment is an environment in which only generated content is displayed. The wearable device 200 may be used in an XR environment and/or an MR environment. If the XR environment and/or MR environment is an environment in which generated content is displayed together with actual content, the wearable device 200 may perform the same operation as that of the AR environment. If the XR environment and/or MR environment is an environment in which only generated content is displayed, the wearable device 200 may perform the same operation as that of the VR environment.

If the usage environment is an AR environment (operation 405-AR), the wearable device 200 may determine an actual environment using a camera (operation 410). For example, the wearable device 200 may determine a surrounding environment (e.g., wall surface and floor), actual content, a size of actual content, a position, and/or a distance. The wearable device 200 may determine whether a plane is detected (operation 415). For example, if a user wearing the wearable device 200 is positioned in a room, the wearable device 200 may detect a plane of the ceiling, the floor, and/or a wall (plane detecting). If a plane is detected (operation 415-YES), the wearable device 200 may generate a cuboidal boundary (operation 420).

If the usage environment is a VR environment (operation 405-VR) or a plane is not detected (operation 415-NO), the wearable device 200 may determine a user's posture (operation 425). For example, the wearable device 200 may determine a state of the wearable device 200 including a position, direction, and/or angle of the wearable device 200 using a sensor, and a user may wear the wearable device 200. Therefore, the user's posture may be the state of the wearable device 200.

Referring to FIG. 4B, the wearable device 200 may determine whether a user is standing or sitting (operation 430). If it is determined that the user is standing or sitting (operation 430-YES), the wearable device 200 may determine whether the number of contents (e.g., content related a task) exceeds a first number (operation 435). For example, the first number may be 1. If the number of the contents exceeds the first number (operation 435-YES), the wearable device 200 may generate a capsular boundary (operation 440). If the number of the contents is equal or smaller than the first number (operation 435-NO), the wearable device 200 may generate a cylindrical boundary (operation 445).

If it is determined that the user is not standing or sitting (operation 430-NO), the wearable device 200 may determine that the user is lying (operation 450). If it is determined that the user is lying, the wearable device 200 may generate a semi-spherical/capsular boundary (operation 455).

If a user's posture is changed or the number of contents is changed, the wearable device 200 may change a generated boundary. For example, if the usage environment is an AR environment and a plane is detected in a real environment, the wearable device 200 may generate a cuboidal boundary. Then, the wearable device 200 may determine the number of contents. If the number of the contents exceeds the first number, the wearable device 200 may determine a user's posture. If it is determined that the user's posture is a standing or sitting posture, the wearable device 200 may change the cuboidal boundary to a capsular boundary. If it is determined that the user's posture is a lying posture, the wearable device 200 may change the cuboidal boundary to a semi-spherical/capsular boundary.

Referring to FIG. 5A, a cuboidal boundary 1 is illustrated. For example, a boundary may be a virtual space including a pre-configured area around a user wearing the wearable device 200 (or the wearable device 200), and displaying content near the surface thereof. Each surface of the cuboidal boundary 1 may be a plane. The wearable device 200 may display content 51 having a planar shape near the surface of the cuboidal boundary 1, based on a user's gaze direction.

Referring to FIG. 5B, a cylindrical boundary 3 is illustrated. A top surface and a bottom surface of the cylindrical boundary 3 are planes, and a side surface thereof may be a curved surface. The wearable device 200 may display the content 53 near the surface of the cylindrical boundary 3, based on a user's gaze direction. For example, if a user's gaze direction is oriented frontward (or sideward or rearward), the wearable device 200 may display the content 53 having a curved shape on the side surface of the cylindrical boundary 3. For example, if a user's gaze direction is oriented upward or downward, the wearable device 200 may display the content 53 having a planar shape on the top surface or the bottom surface of the cylindrical boundary 3.

Referring to FIG. 5C, a capsular boundary 5 is illustrated. A top surface and a bottom surface of the capsular boundary 5 have a semi-spherical shape, and a side surface thereof may have a cylindrical shape. Each surface of the capsular boundary 5 may be a curved surface. The wearable device 200 may display content 55 having a curved shape near the surface of the capsular boundary 5, based on a user's gaze direction.

Referring to FIG. 6, an operation of adjusting and displaying content is described in greater detail.

In the example below, operations may be sequentially performed, but sequential performance is not necessarily required. For example, the sequence of operations may be changed, and at least two operations may be performed in parallel.

According to an embodiment, it may be understood that operation 610 to operation 670 are performed by a processor (e.g., the processor 230 in FIG. 2) of an electronic device (e.g., the electronic device 200 in FIG. 2).

Referring to FIG. 6, the wearable device 200 may determine whether a usage environment is an AR environment or a VR environment (operation 610). If the usage environment is an AR environment (operation 610-AR), the wearable device 200 may detect actual content (operation 620). For example, the actual content may include furniture including a desk, a vase, or a frame placed in an actual room, and/or a tree or a bench positioned in an actual outdoor environment. The wearable device 200 may anchor content to actual content with respect to a lower surface part of the actual content, and provide the anchored content (operation 630). For example, the wearable device 200 may place content, such as a state bar, on a desk placed in an actual room.

If the usage environment is a VR environment (operation 610-VR), the wearable device 200 may identify a guardian area (operation 640).

Referring to FIG. 7, a guardian area 9 and a boundary 7 are illustrated. For example, a guardian area may be a predetermined area in which a user is able to move safely. A VR environment may be an environment in which only generated content is seen to a user. Therefore, if the wearable device 200 is used in a VR environment, a user may be unable to recognize content placed therearound. The wearable device 200 may configure a predetermined area in which a user is able to move safely in a VR environment, by considering content placed therearound. For example, the boundary 7 may be generated to have an area having a size equal to or smaller than that of the guardian area. For example, if a user moves to a border area of the guardian area 9, the wearable device 200 may provide a notification to the user.

The wearable device 200 may determine whether the attribute of content is a task-related attribute or an environment-related attribute (operation 650). For example, content may include normal content (e.g., a frame, a window, a desk, etc.) and/or content related a task (e.g., a task window, a bar related to a task, a pop-up, etc.). The wearable device 200 may determine normal content to have the environment-related attribute (or background attribute) or the task-related attribute, based on relevance to content related a task. For example, the wearable device 200 may determine the attribute of normal content, based on a feature of the normal content, a user's usage pattern, and/or a user's command. For example, if content includes a frame and a desk, the wearable device 200 may determine the frame to have the environment-related attribute and determine the desk to have the task-related attribute. For example, the wearable device 200 may determine the attribute of content, based on an attribute configured according to a user's selection.

If the attribute of content is the task-related attribute (operation 650-task-related attribute), the wearable device 200 may anchor content related a task to the content including the task-related attribute and provide the anchored content related a task (operation 660). For example, the wearable device 200 may anchor a control window to a desk and display same on the desk. If the attribute of content is the environment-related attribute (operation 650-task-related attribute), the wearable device 200 may provide content related a task to avoid the content including the environment-related attribute (operation 670). For example, the wearable device 200 may display a task window on a wall surface in content to avoid a frame.

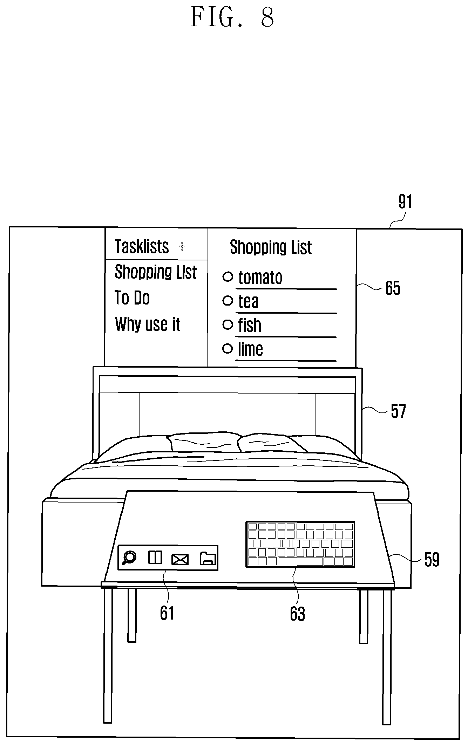

FIG. 8 is a diagram illustrating content in which content is placed according to various embodiments.

Referring to FIG. 8, a screen of content 91 displayed on the display 210 are illustrated. Various contents may be included in the content 91. For example, the content 91 may include a bed 57, a desk 59, a tool bar 61, a keyboard 63, and/or a task window 65. The bed 57 and the desk 59 are normal contents, and the tool bar 61, the keyboard 63, and the task window 65 may be contents related a task.

For example, if the usage environment of the wearable device 200 is an AR environment, the bed 57 and the desk 59 may be actual contents. The wearable device 200 may anchor the tool bar 61 and/or the keyboard 63 to the desk 59 with respect to a lower surface part of the desk 59, and provide the anchored tool bar and/or keyboard. The wearable device 200 may anchor the task window 65 with respect to a lower surface part of a wall surface, and provide the anchored task window. The bed 57 is positioned at the wall surface on which the task window 65 is to be displayed, and thus the wearable device 200 may provide the task window 65 to avoid the bed 57.

For example, if the usage environment of the wearable device 200 is a VR environment, the wearable device 200 may determine the attribute of the bed 57 and the desk 59. For example, the wearable device 200 may determine the bed 57 having a low relevance to content related a task to have the environment-related attribute, and determine the desk 59 having a high relevance to content related a task to have the task-related attribute. For example, the wearable device 200 may configure the bed 57 not related to task performing to have the environment-related attribute, and configure the desk 59 related to task performing to have the task-related attribute. For example, the wearable device 200 may configure the bed 57 to have the environment-related attribute and configure the desk 59 to have the task-related attribute, based on a user's usage pattern. For example, a user may configure the bed 57 to have the environment-related attribute and configure the desk 59 to have the task-related attribute. The wearable device 200 may determine the attribute of the bed 57 and the desk 59, based on the configured attribute. The wearable device 200 may provide the task window 65 to avoid the bed 57 determined to have the environment-related attribute. The wearable device 200 may anchor the tool bar 61 and/or the keyboard 63 to the desk 59 determined to have the task-related attribute, and provide the anchored tool bar and/or keyboard.

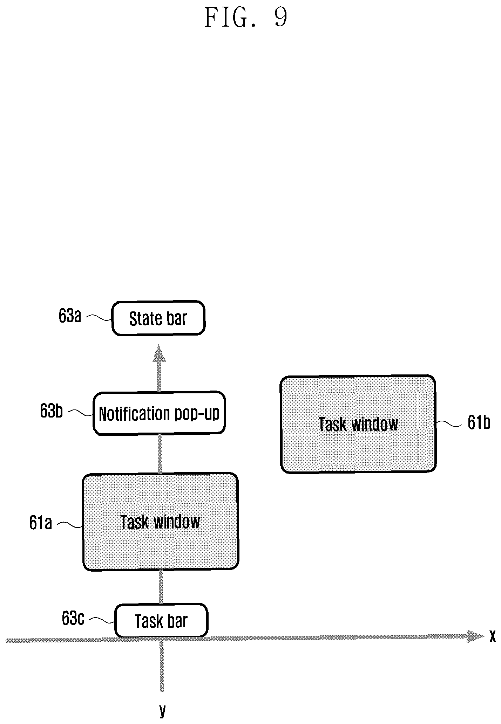

FIG. 9 is a diagram illustrating a lock attribute of content according to various embodiments.

Referring to FIG. 9, multiple contents are illustrated. For example, the multiple contents may include a first task window 61a, a second task window 61b, a state bar 63a, a notification pop-up 63b, and a task bar 63c. The multiple contents may be displayed on the display 210. The wearable device 200 may configure a lock attribute for content. For example, the lock attribute may include user lock or environment lock. For example, the first task window 61a and the second task window 61b may be configured to have environment lock, and the state bar 63a, the notification pop-up 63b, and the task bar 63c may be configured to have user lock. The first task window 61a and the second task window 61b configured to have environment lock may be anchored with respect to a background (or environment). The state bar 63a, the notification pop-up 63b, and the task bar 63c configured to have user lock may be anchored with respect to a user.

For example, the environment shown on the wearable device 200 and/or the environment displayed on the wearable device 200 may be changed in response to a user's movement (or gaze direction movement). The wearable device 200 may position content including a user lock attribute so that a direction of the user's gaze and/or viewing angle looking at the content including the user lock attribute displayed on the display 210 is maintained. In other words, the wearable device 200 may maintain the position of the content including the user lock attribute based on the user, and may change the position of the content including the user lock attribute based on the environment previously shown/displayed. The wearable device 200 may move the state bar 63a, the notification pop-up 63b, and the task bar 63c including the attribute of user lock based on the environment previously shown/displayed. The wearable device 200 may move the state bar 63a, the notification pop-up 63b, and the task bar 63c while maintaining a viewing angle. The wearable device 200 may group the state bar 63a, the notification pop-up 63b, and the task bar 63c into one group and move the group. The wearable device 200 may position content including environment lock attribute in response to a change in the environment. The wearable device 200 may move the position of content including environment lock attribute based on the user. In other words, the wearable device 200 may maintain the position of content including environment lock attribute based on the environment previously shown/displayed. The wearable device 200 may maintain the positions of the first task window 61a and the second task window 61b including the attribute of environment lock based on the environment previously shown/displayed.

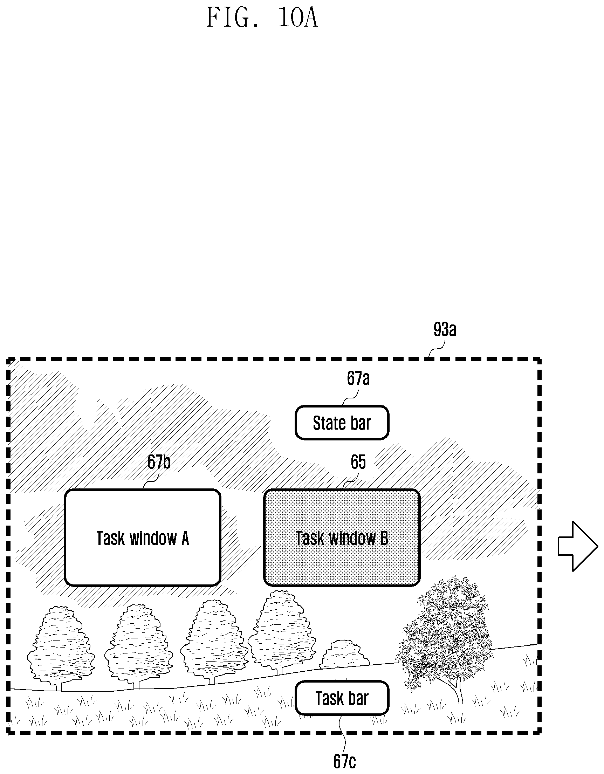

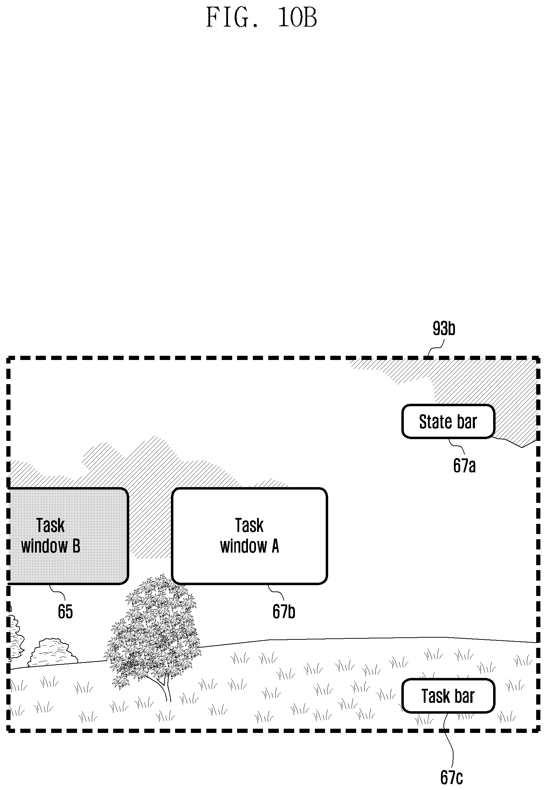

FIGS. 10A and 10B are diagrams illustrating content displayed based on an attribute in response to a user's direction switching according to various embodiments.

Referring to FIG. 10A, an image 93a (or content) including contents displayed on the display 210 is illustrated. For example, the contents may include a state bar 67a, task window A 67b, a task bar 67c, and task window B 65. For example, the state bar 67a and the task bar 67c may be displayed as separate contents as illustrated in FIG. 10A. For example, the state bar 67a and the task bar 67c may be displayed as being separated in one content. For example, contents including the state bar 67a, the task bar 67c, and/or various bars (e.g., control bar) may be called a system user interface (UI).

For example, the wearable device 200 may be used in an AR environment. The wearable device 200 may recognize an external environment (e.g., actual content). For example, the wearable device 200 may capture an image of the external environment using a camera, and recognize the external environment from the captured image. If the wearable device 200 includes a transparent display, the recognized external environment may be an external environment seen through the transparent display. If the wearable device 200 includes a normal display, the recognized external environment may be an external environment of an image displayed on the display. The wearable device 200 may display content by considering the recognized external environment.

For example, the wearable device 200 may determine the attribute of actual content (e.g., tree) in an external environment. If actual content in an external environment includes the task-related attribute, the wearable device 200 may anchor content (e.g., content related a task) to the actual content including the task-related attribute and display the anchored content. If an actual content in an external environment includes the environment-related attribute, the wearable device 200 may display content to avoid the actual content including the environment-related attribute. For example, as illustrated in FIG. 10A, the wearable device 200 may recognize a tree. The tree may include the environment-related attribute. The wearable device 200 may display the state bar 67a, the task window A 67b, the task bar 67c, and the task window B 65 to avoid the tree.

For example, the wearable device 200 may be used in a VR environment. The wearable device 200 may display content by considering normal content in content displayed on the display 210. For example, the wearable device 200 may determine the attribute of normal content (e.g., tree). If normal content includes the task-related attribute, the wearable device 200 may anchor content (e.g., content related a task) to the normal content including the task-related attribute and display the anchored content. If a normal content includes the environment-related attribute, the wearable device 200 may display content to avoid the normal content including the environment-related attribute. For example, as illustrated in FIG. 10A, the wearable device 200 may recognize a tree. The tree may include the environment-related attribute. The wearable device 200 may display the state bar 67a, the task window A 67b, the task bar 67c, and the task window B 65 to avoid the tree.

Referring to FIG. 10B, the image 93b having been changed according to the change of a user's gaze direction is illustrated. For example, if a user's gaze direction is changed to the right, the wearable device 200 may display the image 93b corresponding to a changed viewing angle. Content may include a lock attribute. For example, the state bar 67a, the task window A 67b, and the task bar 67c may include a user lock attribute, and the task window B 65 may include an environment lock attribute.

The wearable device 200 may move content including the user lock attribute based on the environment (or background) according to the change of a user's gaze direction while maintaining a viewing angle, and maintain the position of content including the environment lock attribute based on the environment. For example, the wearable device 200 may move the state bar 67a, the task window A 67b, and the task bar 67c including the user lock attribute based on the environment in response to the change of a user's gaze direction, and maintain the position of the task window B 65 including the environment lock attribute based on the environment. For example, the wearable device 200 may group the state bar 67a, the task window A 67b, and the task bar 67c into one group and move the group. For example, the task window B 65 is anchored to an environment (or background), and thus if a user's gaze direction is changed to the right, the task window B may be displayed to the left based on the environment, compared to the position displayed in the image 93a illustrated in FIG. 10A on the display 210. The state bar 67a, the task window A 67b, and the task bar 67c are anchored to a user, and thus may be moved based on the environment in response to the change of the user's gaze direction while a viewing angle is maintained. The state bar 67a, the task window A 67b, and the task bar 67c may be displayed on positions similar to those displayed in the image 93a illustrated in FIG. 10A on the display 210.

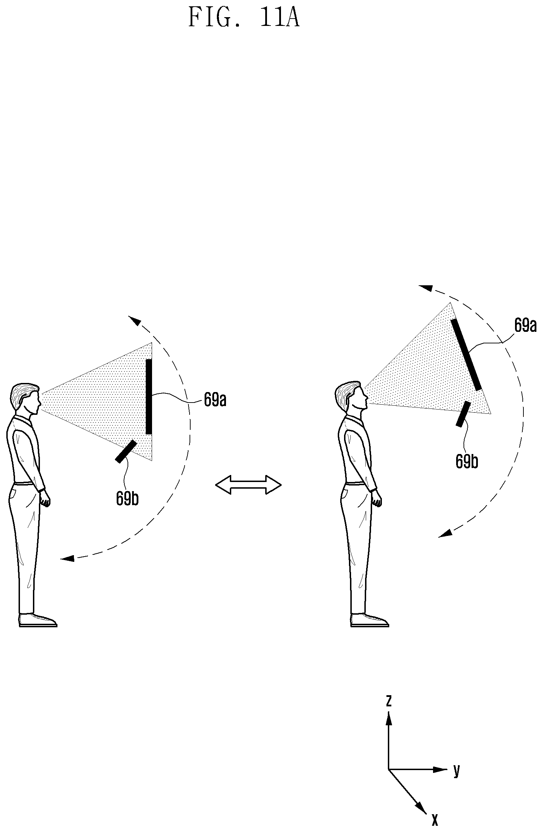

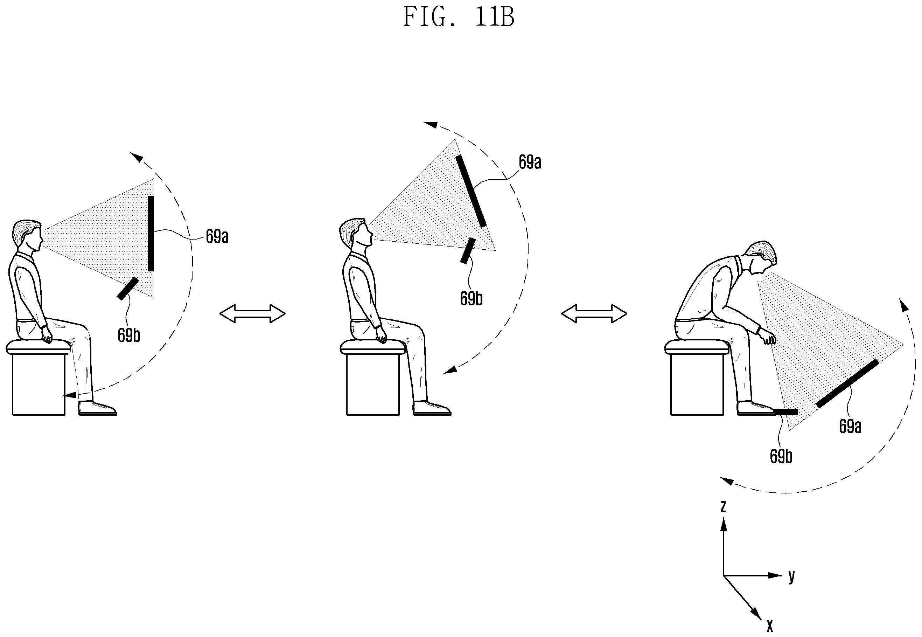

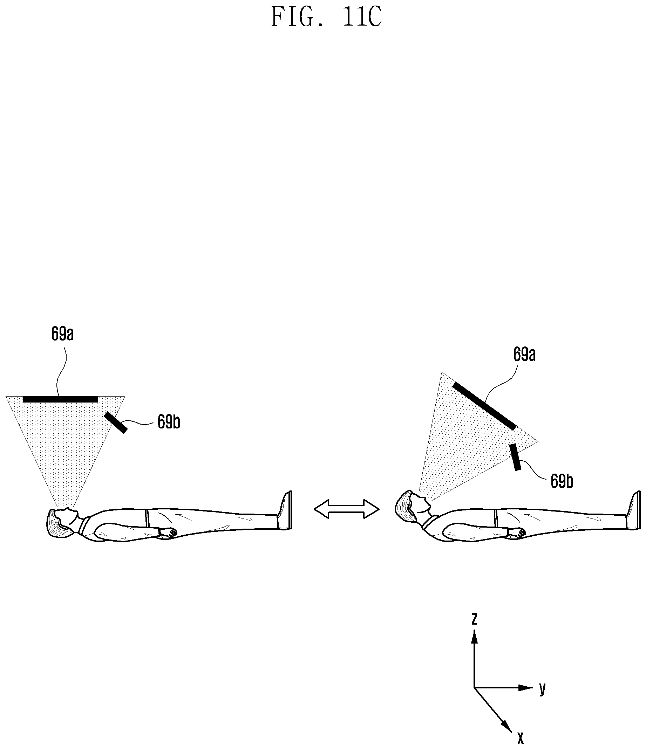

FIGS. 11A, 11B, and 11C are diagrams illustrating content displayed according to a user's posture and gaze direction according to various embodiments.

Referring to FIG. 11A, content (e.g., content related a task) displayed in a standing posture is illustrated. For example, the side of a user is in an x-axis direction, the front thereof is in a y-axis direction, and a vertical direction may be a z-axis direction. The user may wear the wearable device 200. For example, if the user is standing and looking toward the front, the wearable device 200 may display a first content 69a and a second content 69b in a front direction (e.g., +y-axis direction). For example, the contents may include a window, a bar, and/or a pop-up. The gaze direction of the user wearing the wearable device 200 may be oriented upward or downward. In other words, the wearable device 200 may be rotated with respect to the x axis.

Content may include a lock attribute. For example, the lock attribute may include user lock or environment lock. For example, if the first content 69a and the second content 69b include the environment lock attribute, the first content 69a and the second content 69b may be displayed while being anchored to an environment (or background) independently to the movement of the user's gaze direction. If the first content 69a includes the user lock attribute and the second content 69b includes the environment lock attribute, the first content 69a may be moved according to the movement of the user's gaze direction while a predetermined viewing angle is maintained, and the second content 69b may be displayed while being anchored to an environment.

For example, as illustrated in FIG. 11A, if the first content 69a and the second content 69b include the user lock attribute, the first content 69a and the second content 69b may be moved based on the environment according to the movement of the user's gaze direction while a predetermined viewing angle is maintained. The first content 69a and the second content 69b may be grouped into a group, and the first content 69a and the second content 69b may be moved while being grouped.

Referring to FIG. 11B, content displayed in a sitting posture is illustrated. If a user is sitting and looking toward the front, the wearable device 200 may display the first content 69a and the second content 69b in a front direction (e.g., +y-axis direction). For example, when the user is sitting, the positions on which the first content 69a and the second content 69b are displayed may be moved in a -z-axis direction, compared to the positions displayed when the user is standing.

The gaze direction of the user wearing the wearable device 200 may be oriented upward or downward. In other words, the wearable device 200 may be rotated with respect to the x axis.

For example, if the first content 69a and the second content 69b include the environment lock attribute, the first content 69a and the second content 69b may be displayed while being anchored to an environment (or background) independently to the movement of the user's gaze direction. If the first content 69a includes the user lock attribute and the second content 69b includes the environment lock attribute, the first content 69a may be moved according to the movement of the user's gaze direction while a predetermined viewing angle is maintained, and the second content 69b may be displayed while being anchored to an environment.

For example, as illustrated in FIG. 11B, if the first content 69a and the second content 69b include the user lock attribute, the first content 69a and the second content 69b may be moved based on the environment according to the movement of the user's gaze direction while a predetermined viewing angle is maintained. The first content 69a and the second content 69b may be grouped into a group, and the first content 69a and the second content 69b may be moved while being grouped.

Referring to FIG. 11C, a content displayed in a lying posture is illustrated. If a user is lying and looking toward the front, the wearable device 200 may display the first content 69a and the second content 69b in a front direction (e.g., +z-axis direction). For example, when the user is lying, the positions on which the first content 69a and the second content 69b are displayed may be located on a top surface of a boundary.

The gaze direction of the user wearing the wearable device 200 may be oriented upward or downward. In other words, the wearable device 200 may be rotated with respect to the x axis.

For example, if the first content 69a and the second content 69b include the environment lock attribute, the first content 69a and the second content 69b may be displayed while being anchored to an environment (or background) independently to the movement of the user's gaze direction. If the first content 69a includes the user lock attribute and the second content 69b includes the environment lock attribute, the first content 69a may be moved based on the according to the movement of the user's gaze direction while a predetermined viewing angle is maintained, and the second content 69b may be displayed while being anchored to an environment.

For example, as illustrated in FIG. 11C, if the first content 69a and the second content 69b include the user lock attribute, the first content 69a and the second content 69b may be moved based on the environment according to the movement of the user's gaze direction while a predetermined viewing angle is maintained. The first content 69a and the second content 69b may be grouped into a group, and the first content 69a and the second content 69b may be moved while being grouped.

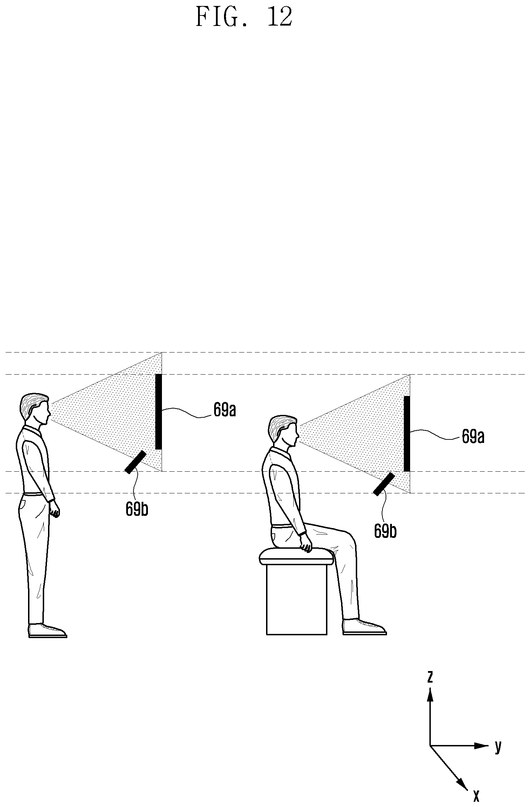

FIG. 12 is a diagram illustrating a task content displayed according to a user's posture according to various embodiments.

Referring to FIG. 12, the first content 69a and the second content 69b displayed in a standing posture and a sitting posture are illustrated. A user may wear the wearable device 200. For example, if the user is standing and looking toward the front, the wearable device 200 may display the first content 69a and the second content 69b in a front direction (e.g., +y-axis direction). The standing user may change the posture to a sitting posture. In other words, the wearable device 200 may vertically move in a -z-axis direction.

For example, if the first content 69a and the second content 69b include the environment lock attribute, the first content 69a and the second content 69b may be displayed while being anchored to an environment (or background) independently to the change of the user's posture. If the first content 69a includes the user lock attribute and the second content 69b includes the environment lock attribute, the first content 69a may be moved based on the environment according to the change of the user's posture while a predetermined viewing angle is maintained, and the second content 69b may be displayed while being anchored to an environment.

For example, as illustrated in FIG. 12, if the first content 69a and the second content 69b include the user lock attribute, the first content 69a and the second content 69b may be moved based on the environment in the -z-axis direction according to the change of the user's posture while a predetermined viewing angle is maintained. The first content 69a and the second content 69b may be grouped into a group, and the first content 69a and the second content 69b may be moved while being grouped.

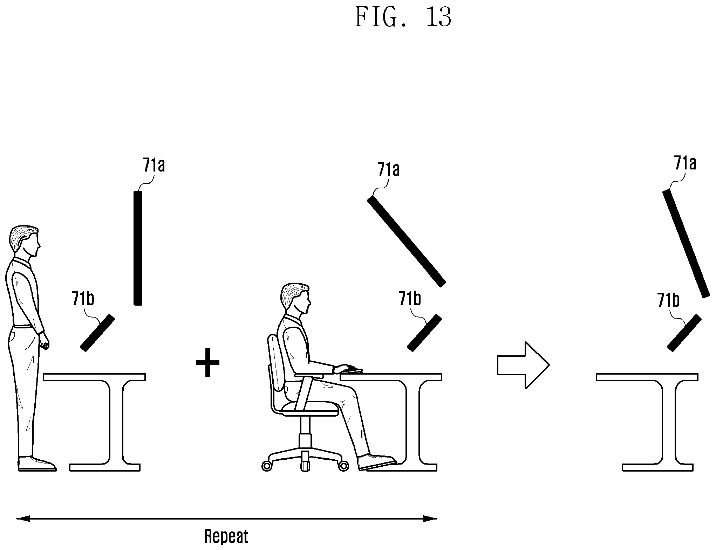

FIG. 13 is a diagram illustrating a content displayed according to a user's repeated posture according to various embodiments.

Referring to FIG. 13, a first content 71a and a second content 71b displayed in a standing posture and a sitting posture are illustrated. For example, as illustrated in FIG. 12, if the first content 69a and the second content 69b include the user lock attribute, the first content 69a and the second content 69b may be moved in the -z-axis direction according to the change of the user's posture while a predetermined viewing angle is maintained. The first content 69a and the second content 69b may be grouped into a group, and the first content 69a and the second content 69b may be moved while being grouped. For example, if the first content 69a and the second content 69b include the environment lock attribute, the first content 69a and the second content 69b may be displayed while being anchored to an environment (or background) independently to the change of the user's posture.

For example, if the first content 69a includes the environment lock attribute and the second content 69b includes the user lock attribute, the first content 69a may be displayed according to the change of the user's posture while being anchored to an environment, and the second content 69b may be moved based on the environment while a predetermined viewing angle is maintained. For example, as illustrated in FIG. 13, in a standing posture of a user, the first content 71a may be displayed to be perpendicular (almost perpendicular) to the ground, and the second content 71b may be displayed to have a predetermined angle with respect to the ground. If the user's posture is changed to a sitting posture, a displayed position of the first content 69a including the environment lock attribute may be maintained, and the first content may be changed and displayed to have an angle corresponding to the user's viewing angle according to the sitting posture. The second content 71b may be moved in the -z-axis direction while the user's viewing angle is maintained. The wearable device 200 may adjust an angle of the second content 71b, based on a moved position of the second content 71b and the shape of a generated boundary.

For example, a user may repeat a standing posture and a sitting posture. For example, if the same posture is repeated a pre-configured number of times or more within a pre-configured time, the wearable device 200 may determine that the user's posture is repeated. The wearable device 200 may fix an angle of the first content 71a including the environment lock attribute to an angle ranging between a first angle displayed when the user is standing and a second angle displayed when the user is sitting, so as to display the first content. The wearable device 200 may fix the second content 71b including the user lock attribute to have a position ranging between a first position displayed when the user is standing and a second position displayed when the user is sitting and/or to an angle ranging between a third angle displayed when the user is standing and a fourth angle displayed when the user is sitting, so as to display the second content.

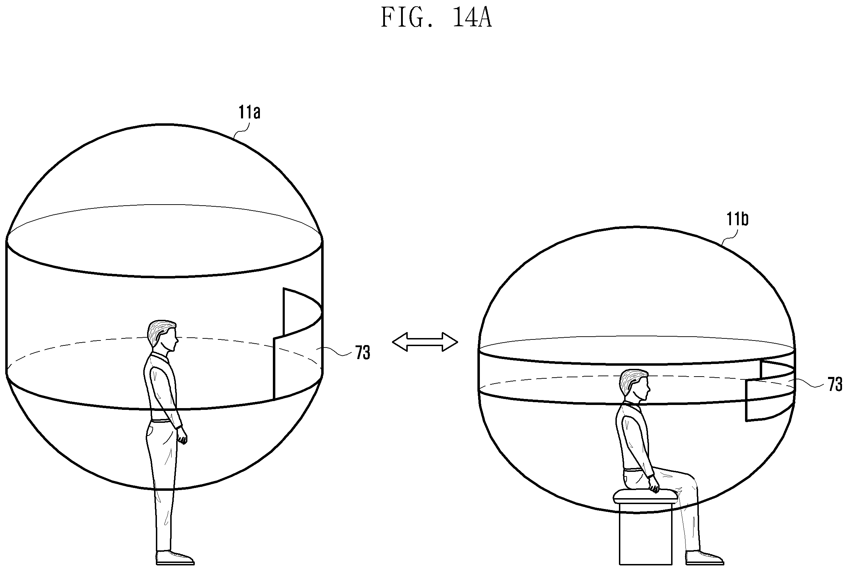

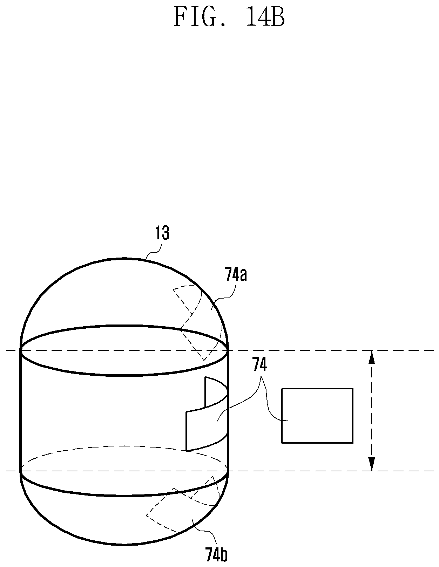

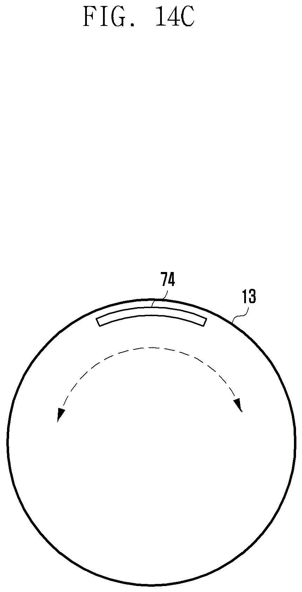

FIGS. 14A, 14B, and 14C are diagrams illustrating content displayed on a boundary according to various embodiments.

Referring to FIG. 14A, a shape of a boundary changing according to the change of a user's posture is illustrated. For example, in a standing posture of a user, the wearable device 200 may generate a capsular boundary 11a. The wearable device 200 may display content (e.g., content related a task) 73 to the front (or on a side surface of the boundary) of the user in the user's standing posture. In the user's standing posture, the side surface of the capsular boundary 11a may include a first height. If the user's posture is changed to a sitting posture, the wearable device 200 may change the shape of the boundary to a shape corresponding to the user's posture. If the user's posture is changed to a sitting posture, the wearable device 200 may change the capsular boundary 11b to have a second height smaller than the first height, and display the content 73, based on the boundary 11b having the changed second height. For example, the wearable device 200 may display content 73 to the front (or on the side surface of the boundary) of the user even in the user's sitting posture. For example, the height of the boundary gets smaller in a user's sitting posture. Therefore, if the user's gaze angle (or direction) is changed, the wearable device 200 may display the content 73 on upper and lower semi-spherical areas of the capsular boundary 11b having the second height.

Referring to FIG. 14B and FIG. 14C, as an example, a shape and a position of content displayed on a capsular boundary 13 is illustrated.

Referring to FIG. 14B, the wearable device 200 may display content (e.g., content related a task) 74 on a side surface of the capsular boundary 13. As described with reference to FIG. 14A, the content may be displayed on a surface of the boundary corresponding to the movement of a user's gaze direction. For example, the content 74 may include content related a task, and the task content may include the user lock attribute. The content including the user lock attribute may be moved based on the environment according to the movement of the user's gaze direction while a viewing angle is maintained.

For example, if the user's gaze direction is moved upward, the wearable device 200 may display the content including the user lock attribute on a side surface area 74a of an upper semi-sphere. For example, the content 74 may include content including the environment lock attribute displayed on the side surface area 74a of the upper semi-sphere. If the user's gaze direction is oriented to the front, the content including the environment lock attribute displayed on the side surface area 74a of the upper semi-sphere may not be displayed within the user's viewing angle range (or screen area). If the user's gaze direction is changed upward, the content including the environment lock attribute positioned on the side surface area 74a of the upper semi-sphere may be displayed in a screen area.

For example, if the user's gaze direction is moved downward, the wearable device 200 may display content including the user lock attribute on a side surface area 74b of a lower semi-sphere. For example, the content 74 may include content including the environment lock attribute displayed on the side surface area 74b of the lower semi-sphere. If the user's gaze direction is oriented to the front, the content including the environment lock attribute displayed on the side surface area 74b of the lower semi-sphere may not be displayed within the user's viewing angle range (or screen area). If the user's gaze direction is changed downward, the content including the environment lock attribute positioned on the side surface area 74b of the lower semi-sphere may be displayed in a screen area.

Referring to FIG. 14C, the capsular boundary 13 when viewed from above is illustrated. For example, a side surface of the capsular boundary 13 may be a curved surface. When the content 74 is displayed on the side surface of the capsular boundary 13, the wearable device 200 may display the content 74 having a shape to which curve is applied. An upper and/or lower semi-spheres of the capsular boundary 13 may have curved surfaces. When the content 74 is displayed on the upper and/or lower semi-spheres of the capsular boundary 13, the wearable device 200 may display the content 74 having a shape to which curve is applied.

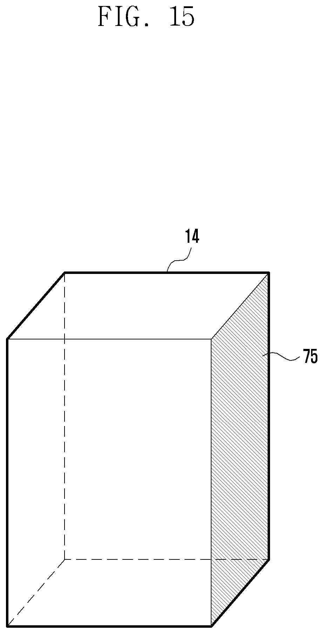

FIG. 15 is a diagram illustrating content displayed on a cuboidal boundary according to various embodiments.

Referring to FIG. 15, a cuboidal boundary 14 is illustrated. Each surface of the cuboidal boundary 14 may be a plane. When content (e.g., content related a task) 75 is displayed on a surface of the cuboidal boundary 14, the wearable device 200 may display the content 75 having a planar shape.

For example, the wearable device 200 may change a size of the content 75 and display the content 75 on one surface of the cuboidal boundary 14. For example, as illustrated in FIG. 15, the wearable device 200 may change the size of the content 75 so that the content is displayed on the entire area of one surface of the cuboidal boundary 14. For example, if at least one content is positioned on one surface on which the content 75 is displayed, the wearable device 200 may change the size of the content 75 so that the content 75 is displayed on a partial area of the one surface of the cuboidal boundary 14 while avoiding the at least one content.

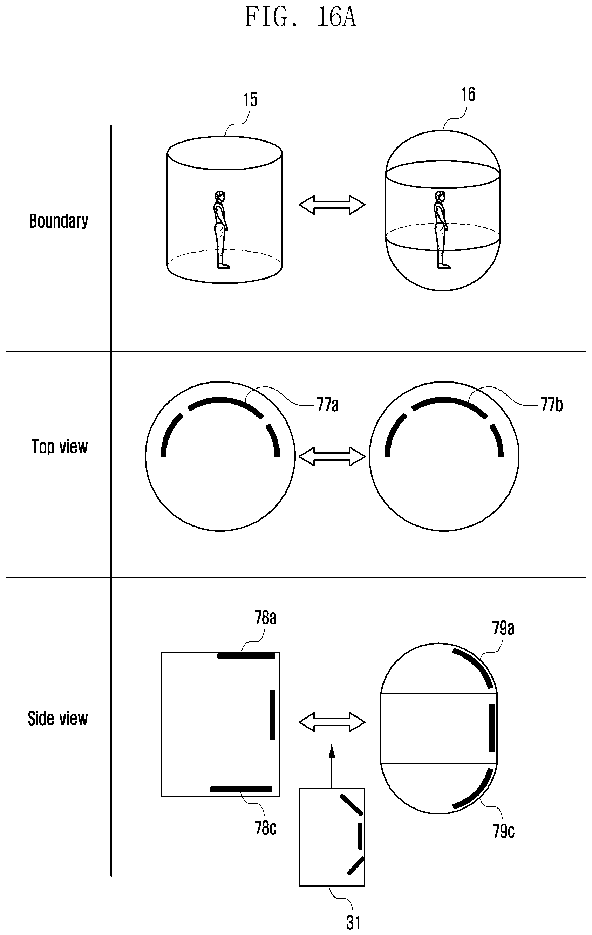

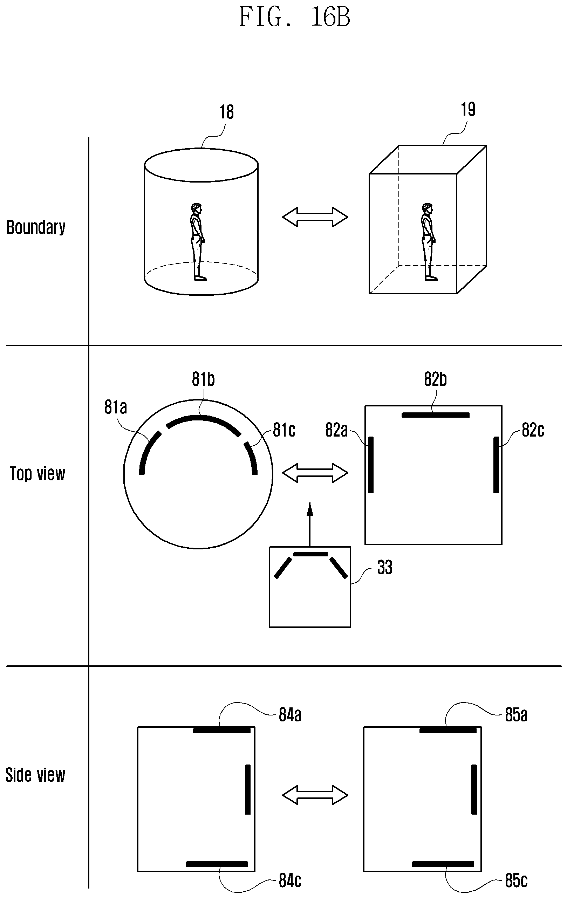

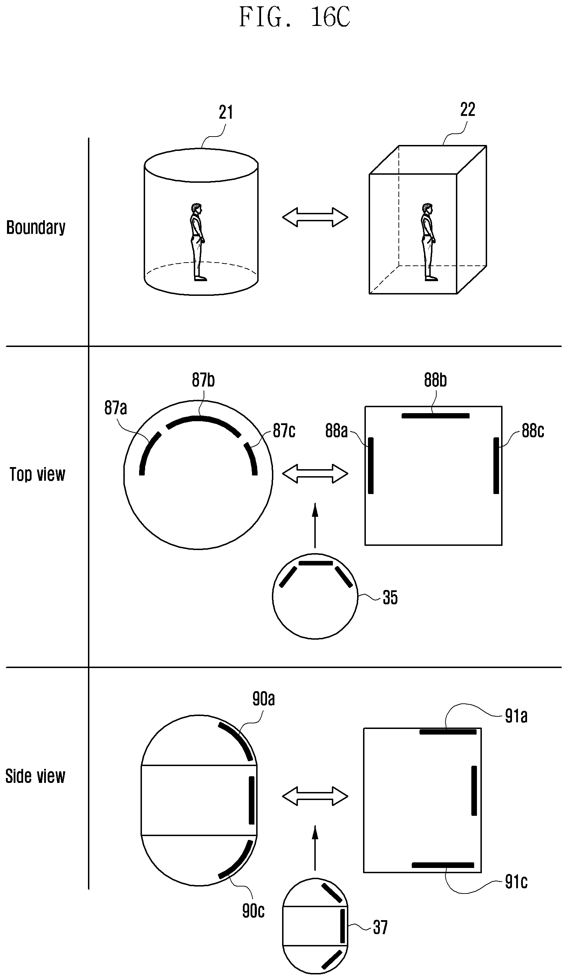

FIGS. 16A, 16B, and 16C are diagrams illustrating content displayed according to a change of a boundary according to various embodiments.

Referring to FIG. 16A, an example of changing between a cylindrical boundary 15 and a capsular boundary 16 is illustrated. For example, the wearable device 200 may change the shape of a boundary, based on a usage environment, the number of contents, and/or a user's posture. For example, if the number of contents is equal to or smaller than a first number (e.g., 1) in a user's standing or sitting posture, the wearable device 200 may generate the cylindrical boundary 15. If the number of contents exceeds the first number, the wearable device 200 may generate the capsular boundary 16. If the number of the contents is changed, the wearable device 200 may change the shape of the boundary.

A shape (top view) when the cylindrical boundary 15 is viewed from above and a shape (top view) when the capsular boundary 16 is viewed from above may be circular. Content 77a displayed on a side surface of the cylindrical boundary 15 and content 77b displayed on a side surface of the capsular boundary 16 may have the same shape to which curve is applied. A shape (side view) when the cylindrical boundary 15 is viewed from the side is quadrangular, and a shape when the capsular boundary 16 is viewed from the side may be a shape including upper and lower semi-spherical areas and a central area of a plane. Content 78a and 78c displayed on top and bottom surfaces of the cylindrical boundary 15 has a planar shape, and content 79a and 79c displayed on the upper and lower semi-spherical areas of the capsular boundary 16 has a shape to which curve is applied.

For example, according to the change of a boundary, the shape of content displayed thereon may also be changed. For example, if the cylindrical boundary 15 is changed to the capsular boundary 16, the content 78a and 78c displayed on the top and bottom surfaces of the cylindrical boundary 15 using a planar shape may be changed to the content 79a and 79c having a shape to which curve is applied, on the upper and lower semi-spherical areas of the capsular boundary 16. For example, if the capsular boundary 16 is changed to the cylindrical boundary 15, the content 79a and 79c having a shape to which curve is applied, on the upper and lower semi-spherical areas of the capsular boundary 16 may be changed to the content 78a and 78c displayed on the top and bottom surfaces of the cylindrical boundary 15 using a planar shape. For example, when the content 78a and 78c having a planar shape (or the content 79a and 79c to which curve is applied) is changed to the content 79a and 79c to which curve is applied (or the content 78a and 78c having a planar shape), the wearable device 200 may temporarily display content 31 to which curve has not been applied, so that a user recognizes that the shape of the content is naturally changed.

Referring to FIG. 16B, an example of changing between a cylindrical boundary 18 and a cuboidal boundary 19 is illustrated. For example, if the number of contents is equal to or smaller than a first number (e.g., 1) in a user's standing or sitting posture, the wearable device 200 may generate the cylindrical boundary 18. If a plane is detected in an AR environment and the number of contents is equal to or smaller than the first number, the wearable device 200 may generate the cuboidal boundary 19. If a usage environment is changed or a plane is not detected, the wearable device 200 may change the shape of the boundary.

A shape (top view) when the cylindrical boundary 18 is viewed from above is circular, and a shape when the cuboidal boundary 19 is viewed from above may be quadrangular. Content 81a, 81b, and 81c displayed on a side surface of the cylindrical boundary 18 may have a shape to which curve is applied, and content 82a, 82b, and 82c displayed on a side surface of the cuboidal boundary 19 may have a planar shape. Shapes (side views) when the cylindrical boundary 18 and the cuboidal boundary 19 is viewed from the side may be quadrangular. Content 84a and 84c displayed on top and bottom surfaces of the cylindrical boundary 18, and content 85a and 85c displayed on top and bottom surfaces of the cuboidal boundary 19 may have a planar shape.

For example, according to the change of a boundary, the shape of content displayed thereon may also be changed. For example, if the cylindrical boundary 18 is changed to the cuboidal boundary 19, the content 81a and 81c displayed on the side surface of the cylindrical boundary 18 using a shape to which curve is applied may be changed to the content 82a and 82c having a planar shape on left and right side surfaces of the cuboidal boundary 19. For example, if the cuboidal boundary 19 is changed to the cylindrical boundary 18, the content 82a and 82c having a planar shape on the left and right side surfaces of the cuboidal boundary 19 may be changed to the content 81a and 81c displayed on the side surface of the cylindrical boundary 18 using a shape to which curve is applied. For example, when the content 81a and 81c to which curve is applied (or the content 82a and 82c having a planar shape) is changed to the content 82a and 82c having a planar shape (or the content 81a and 81c to which curve is applied), the wearable device 200 may temporarily display content 33 to which curve has not been applied, so that a user recognizes that the shape of the content is naturally changed.

Referring to FIG. 16C, an example of changing between a capsular boundary 21 and a cuboidal boundary 22 is illustrated. For example, if a user is lying or the number of contents exceeds a first number (e.g., 1), the wearable device 200 may generate the capsular boundary 21. If a plane is detected in an AR environment and the number of contents is equal to or smaller than the first number, the wearable device 200 may generate the cuboidal boundary 22. If a usage environment, a posture, and/or the number of the contents is changed, the wearable device 200 may change the shape of the boundary.

A shape (top view) when the capsular boundary 21 is viewed from above is circular, and a shape when the cuboidal boundary 22 is viewed from above may be quadrangular. Content 87a, 87b, and 87c displayed on a side surface of the capsular boundary 21 may have a shape to which curve is applied, and content 88a, 88b, and 88c displayed on a side surface of the cuboidal boundary 22 may have a planar shape. A shape (side view) when the capsular boundary 21 is viewed from the side is a shape including upper and lower semi-spherical areas and a central area of a plane, and a shape when the cuboidal boundary 22 is viewed from the side may be quadrangular. Content 90a and 90c displayed on the upper and lower semi-spherical areas of the capsular boundary 21 may have a shape to which curve is applied, and content 91a and 81c displayed on top and bottom surfaces of the cuboidal boundary 22 may have a planar shape.

For example, according to the change of a boundary, the shape of content displayed thereon may also be changed. For example, if the capsular boundary 21 is changed to the cuboidal boundary 22, the content 87a and 87c displayed on the side surface of the capsular boundary 21 using a shape to which curve is applied may be changed to the content 88a and 88c having a planar shape on left and right side surfaces of the cuboidal boundary 22. The content 90a and 90c having a shape to which curve is applied, on the upper and lower semi-spherical areas of the capsular boundary 21 may be changed to the content 91a and 91c displayed on the top and bottom surfaces of the cuboidal boundary 22 using a planar shape. For example, if the cuboidal boundary 22 is changed to the capsular boundary 21, the content 88a and 88c having a planar shape on left and right side surfaces of the cuboidal boundary 22 may be changed to the content 87a and 87c displayed on the side surface of the capsular boundary 21 using a shape to which curve is applied. The content 91a and 91c displayed on the top and bottom surfaces of the cuboidal boundary 22 using a planar shape may be changed to the content 90a and 90c having a shape to which curve is applied, on the upper and lower semi-spherical areas of the capsular boundary 21. For example, when the content 87a, 87c, 90a, and 90c to which curve is applied (or the content 88a, 88c, 91a, and 91c having a planar shape) is changed to the content 88a, 88c, 91a, and 91c having a planar shape (or the content 87a, 87c, 90a, and 90c to which curve is applied), the wearable device 200 may temporarily display content 35 and 37 to which curve has not been applied, so that a user recognizes that the shape of the content is naturally changed.

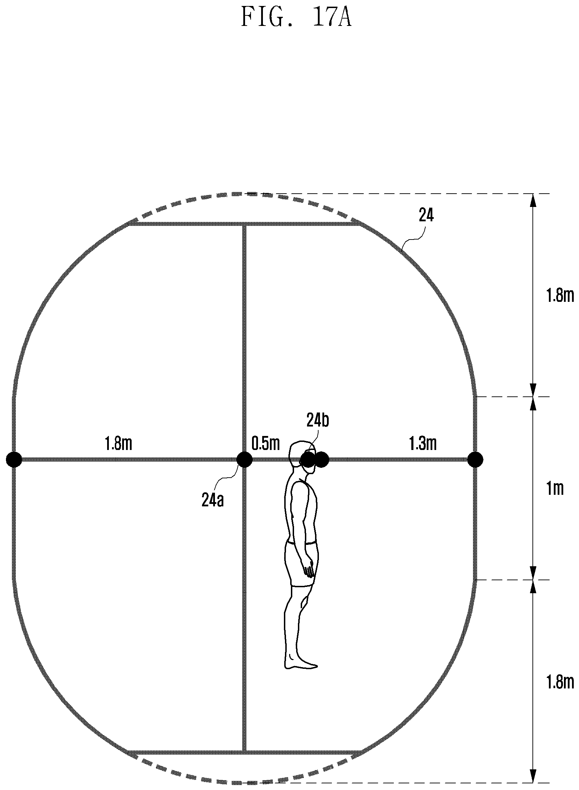

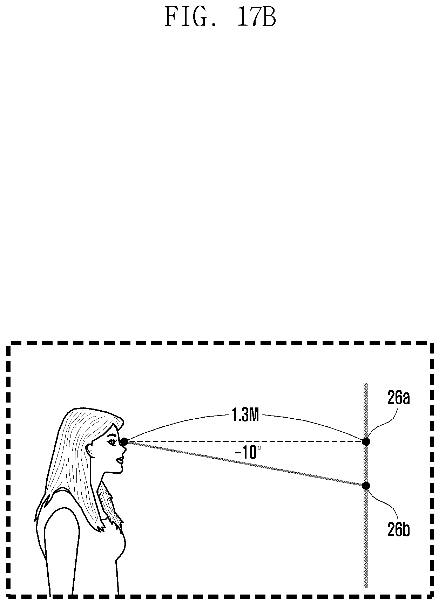

FIGS. 17A and FIG. 17B are diagrams illustrating an offset of a virtual space according to various embodiments.

Referring to FIG. 17A, a boundary 24 generated to be centered on a user wearing the wearable device 200 is illustrated. For example, the boundary 24 may have a capsular shape. A size of the capsular boundary 24 may be configured in consideration of the user (e.g., the height of the user). For example, the height of each of upper and lower semi-spheres of the capsular boundary 24 may be configured to be about 1.8 m. The height of a cylindrical part between the upper and lower semi-spheres may be configured to be about 1 m. The entire height of the capsular boundary 24 including the upper and lower semi-spheres and the cylindrical part may be configured to be about 4.6 m.

Content (e.g., content related a task) may be displayed in a predetermined area including the surface of the boundary 24. Content displayed near the surface of the boundary 24 may be displayed at a different distance from the user according to the type of the content. For example, a task window and/or an application may be displayed at a distance of about 1.3 m to 2 m from the user. A system-related content may be displayed at a distance of about 0.7 m from the user. When the boundary 24 is generated, the wearable device 200 may generate the boundary 24 by considering the user's visual convenience, manipulation convenience, and/or an offset for placement of pieces of content (e.g., applications) at angles making the user feel natural (or soft). For example, as illustrated in FIG. 17A, the wearable device 200 may generate the boundary 24 so that a central point 24a of the boundary is formed at a predetermined distance behind a central point 24b of the user's face (or the wearable device 200 worn on the user). The distance between the central point 24a of the boundary 24 and the central point 24b of the user's face may be an offset of the boundary. For example, the offset of the boundary may be configured to be about 0.5 m.

Referring to FIG. 17B, an offset of content displayed in a surface area of the boundary 24 is illustrated. For example, a gaze of a user wearing the wearable device 200 may be oriented to a point 26b slightly downward from a horizontal point 26a. When a central area of the content displayed in the surface area of the boundary 24 is displayed on the point 26b slightly downward from the horizontal point 26a of the user's face, the user may watch the content conveniently. The wearable device 200 may display the content so that the central area of the content is positioned on the point 26b slightly downward from the horizontal point 26a of the user's gaze. An angle between the horizontal point 26a of the user's gaze and the point 26b on which the central area of the content is positioned may be an offset of the content. For example, the offset of the content may be configured to be about -10 degrees.

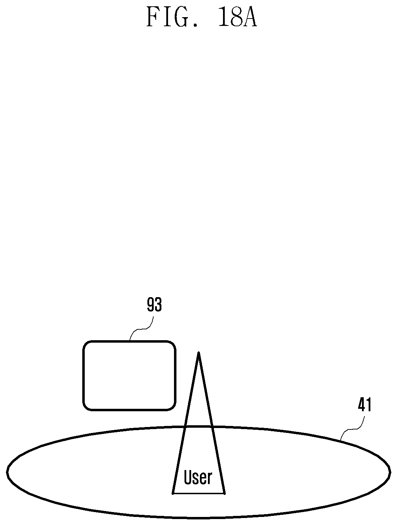

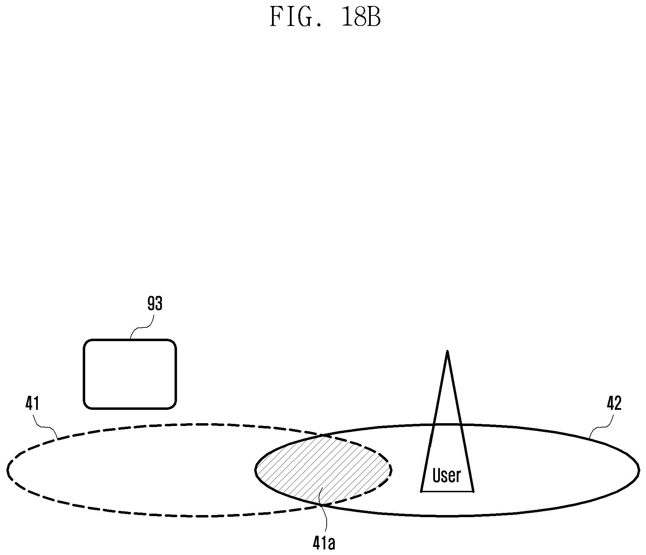

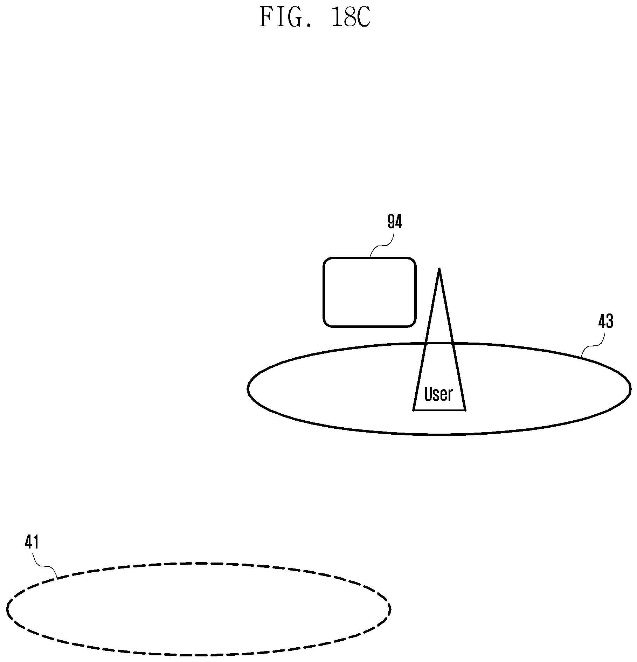

FIGS. 18A, 18B, and 18C are diagrams illustrating an operation of a wearable device when a user's position and/or gaze direction is moved according to various embodiments.

Referring to FIG. 18A, the wearable device 200 may generate a boundary centered on a user. The user may be positioned in a boundary area 41. The wearable device 200 may display content 93 near the surface of the boundary. The wearable device 200 may configure a lock attribute for the content 93. For example, the wearable device 200 may configure a user lock attribute for the content 93. The content 93 configured to have user lock may be anchored with respect to the user. The user may move or move the gaze direction outside the boundary area 41.

Referring to FIG. 18B, an example in which the user has moved by a first distance from the current position is illustrated. An area 42 to which the user has moved may be an area including an overlapping area 41a overlapping with the existing boundary area 41. For example, if the radius of the boundary (or the distance to the border of the boundary) is about 1 m, and the user has moved by a distance smaller than about 2 m, the area 42 to which the user has moved and the existing boundary area 41 may include the overlapping area 41a. If the area 42 to which the user has moved and the existing boundary area 41 includes the overlapping area 41a, the wearable device 200 may maintain the position of the content 93 for a predetermined time.

As described above, the wearable device 200 may move the content 93 including the user lock attribute based on an environment according to the user's movement while maintaining a viewing angle. However, if the movement distance of the user is smaller than a predetermined distance, the user may be temporarily out of the boundary area 41. If the user is temporarily out of the boundary area 41, the user may return to the boundary area 41. The wearable device 200 may maintain the current position of the content 93 for a predetermined time even if the content 93 includes the user lock attribute, by considering the possibility that the user may return to the boundary area 41. If the user has not returned to the boundary area 41 even after the predetermined time, the wearable device 200 may generate a boundary, based on the moved position, or move the position of the content 93 including the user lock attribute based on the environment.

For example, the user may maintain the position thereof and move a gaze direction. The user may temporarily move the gaze direction, and thus the wearable device 200 may maintain the current position of the content 93 for a predetermined time even if the content 93 includes the user lock attribute. If the user's gaze direction has not returned even after the predetermined time, the wearable device 200 may move the position of the content 93 including the user lock attribute, based on the environment according to the user's gaze direction.

Referring to FIG. 18C, an example in which the user has moved by a second distance from the current position is illustrated. An area 43 to which the user has moved may be out of the existing boundary area 41. For example, if the radius of the boundary (or the distance to the border of the boundary) is about 1 m, and the user has moved by about 3 m, the area 43 to which the user has moved may be out of the existing boundary area 41. If the area 44 to which the user has moved is out of the existing boundary area 41, the wearable device 200 may provide a notification to the user. For example, the wearable device 200 may display a notification pop-up and/or a notification message on the display 210, or output a notification sound and/or a notification speech via a speaker (e.g., the sound output module 155 in FIG. 1).

If the user returns to the existing boundary area 41, the wearable device 200 may maintain the current position of the content 93. If the user does not return to the existing boundary area 41, the wearable device 200 may generate a boundary, based on the moved position. For example, if the wearable device 200 is used in a VR environment, the wearable device 200 may configure a guardian area by considering the user's safety. The wearable device 200 may generate a boundary by considering the guardian area in a VR environment. The wearable device 200 may place content 94 (e.g., content including a lock attribute), based on the generated boundary. For example, the wearable device 200 may place the content 94 in an area designated by the user.

For example, the wearable device 200 may store information of the generated boundary and information of the displayed content. For example, the information of the boundary may include information of a shape and/or a size of the boundary. The information of the content may include information of a type and/or a displayed position of the displayed content. The wearable device 200 may be turned off or switched to a standby state by the user or due to non-use for a pre-configured time. Thereafter, if the wearable device 200 is operated again (e.g., the wearable device is turned on or switched to an active state), the wearable device 200 may determine a usage environment (e.g., AR environment or VR environment) and/or a surrounding environment (e.g., outdoor or indoor). If the re-operated environment (e.g., the usage environment and/or the surrounding environment) is identical (or similar) to the environment before the operation, the wearable device 200 may display the content, based on the information of the boundary and the information of the displayed content, which are stored.

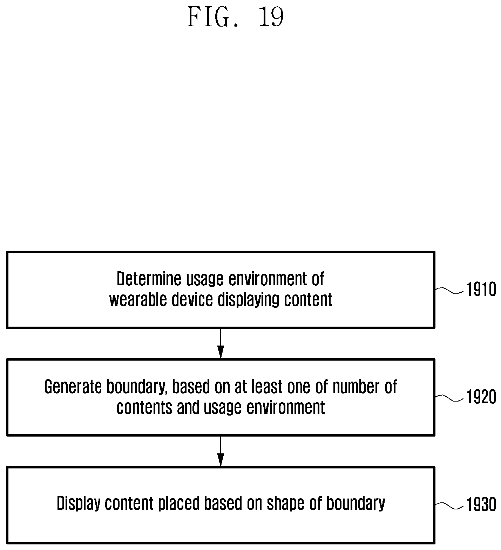

FIG. 19 is a flowchart illustrating an example method of displaying content according to various embodiments.

In the example below, operations may be sequentially performed, but sequential performance is not necessarily required. For example, the sequence of operations may be changed, and at least two operations may be performed in parallel.

According to an embodiment, it may be understood that operation 1910 to operation 1930 are performed by a processor (e.g., the processor 230 in FIG. 2) of an electronic device (e.g., the electronic device 200 in FIG. 2).

Referring to FIG. 19, the wearable device 200 may determine a usage environment of the wearable device 200 displaying content (operation 1910). For example, the usage environment may include an AR environment, a VR environment, an XR environment, and/or an MR environment.

The wearable device 200 may generate a boundary, based on at least one of the number of contents and a usage environment (operation 1920). For example, the boundary may include a pre-configured area surrounding at least a part of a user or the wearable device based on the user wearing the wearable device or the wearable device. The wearable device 200 may display content on the surface of the boundary. The wearable device 200 may move content including a pre-configured lock attribute on the surface of the boundary according to a user's posture. For example, the pre-configured lock attribute may include a user lock or environment lock attribute.

For example, if a usage environment is an AR environment and a plane is detected in a real environment, the wearable device 20 may generate a cuboidal boundary. For example, if a usage environment is a VR environment and the number of contents is equal to or smaller than a first number, the wearable device 200 may generate a cylindrical boundary. For example, the first number may be 1. For example, if an environment is a single task environment, the wearable device 200 may generate a cylindrical boundary. For example, if a usage environment is a VR environment and the number of contents exceeds the pre-configured first number, the wearable device 200 may generate a capsular boundary. For example, if an environment is a multi-task environment, the wearable device 200 may generate a capsular boundary.

The wearable device 200 may display content placed based on a shape of a boundary (operation 1930). For example, if a usage environment is a VR environment, the wearable device 200 may determine the attribute of content included in content, as a task-related attribute or an environment-related attribute. The wearable device 200 may display content to avoid content including the environment-related attribute. For example, the wearable device 200 may anchor content to content including the task-related attribute and display the anchored content. For example, if a generated boundary is a cuboidal boundary, the wearable device 200 may change the size of content to display the content in the entire area of one surface of the cuboidal boundary. For example, the wearable device 200 may change the size of content by considering content positioned on one surface of a boundary so that the content is displayed to avoid the content.

The wearable device 200 may change a boundary. For example, if the number of contents exceeds a pre-configured first number in an AR environment or the number of contents is changed in a VR environment, the wearable device 200 may change a generated boundary, based on the number of the contents. For example, if a first boundary is changed to a second boundary, the wearable device 200 may change the shape of a first content displayed using a curved shape on a curved surface of the first boundary, to a planar shape on a plane of the second boundary. For example, the wearable device 200 may change the shape of the first content displayed on a plane of the first boundary using a planar shape, to a curved shape on a curved surface of the second boundary, and display the changed shape of the content. For example, when the shape of the first content is changed and displayed, the wearable device 200 may temporarily display the first content to which curve has not been applied.

For example, the wearable device 200 may be configured to have the user lock attribute, control content, content in operation, frequently used content determined based on the user's usage pattern, content configured by the user, and/or notification-related content. The wearable device 200 may configure, to have the environment lock attribute, contents other than content including the user lock attribute. The wearable device may anchor content including the user lock attribute with respect to the user. The wearable device 200 may move content including the user lock attribute based on the environment in response to the user's movement and display the moved content while maintaining a viewing angle. For example, if there are multiple contents including the user lock attribute, the wearable device 200 may group the multiple contents into one group. The wearable device 200 may move the group according to the user's movement.

As an example, a wearable device may include: a display, at least one processor comprising processing circuitry, and a memory storing instructions that, when executed by the at least one processor. At least one processor, individually and/or collectively, may be configured to execute the stored instruction and to cause the wearable device to: determine a usage environment of the wearable device displaying content; generate a boundary, based on at least one of the number of contents and the usage environment; and display, through the display, the content placed based on a shape of the boundary; wherein the boundary may comprise a virtual space including a specified area surrounding at least a part of a user or the wearable device based on the user wearing the wearable device or the wearable device, in which the content is displayed on a surface of the boundary, and the content including a lock attribute is moved on the surface according to the user's posture.

As an example, at least one processor, individually and/or collectively, may be configured to cause the wearable device to: based on the usage environment being an augmented reality (AR) environment and a plane being detected in an actual environment, generate a cuboidal boundary; based on the usage environment being a virtual reality (VR) environment and the number of the contents being equal to or less than a specified first number, generate a cylindrical boundary; and based on the usage environment being a virtual reality (VR) environment and the number of the contents exceeding the specified first number, generate a capsular boundary.

As an example, at least one processor, individually and/or collectively, may be configured to cause the wearable device to: based on the number of the contents exceeding the specified first number in the AR environment or the number of the contents being changed in the VR environment, change the generated boundary, based on the number of the contents.

As an example, at least one processor, individually and/or collectively, may be configured to cause the wearable device to: based on a first boundary being changed to a second boundary, change a shape of a first content displayed on a curved surface of the first boundary using a curved shape, to a planar shape on a plane of the second boundary, or change the shape of the first content displayed on a plane of the first boundary using a planar shape, to a curved shape on a curved surface of the second boundary and display the changed shape of the first content on the display; and based on the shape of the first content being changed and displayed, temporarily display, on the display, the first content to which curve has not been applied.

As an example, at least one processor, individually and/or collectively, may be configured to cause the wearable device to: based on the generated boundary being a cuboidal boundary, change a size of the content and display the content in an area of one surface of the cuboidal boundary.

As an example, at least one processor, individually and/or collectively, may be configured to cause the wearable device to: based on the usage environment being a VR environment, determine an attribute of second content included in the content as a task-related attribute or an environment-related attribute; and display the content to avoid the second content including the environment-related attribute, or anchor the content to the second content including the task-related attribute and display the anchored content within or around the second content.

As an example, the pre-configured lock attribute may include a user lock attribute. At least one processor, individually and/or collectively, may be configured to cause the wearable device to have the user lock attribute, at least one of control content, content in operation, a frequently used content determined based on the user's usage pattern, content configured by the user, and notification-related content.

As an example, at least one processor, individually and/or collectively, may be configured to cause the wearable device to: anchor content including the user lock attribute with respect to the user; and move the content including the user lock attribute relative to an environment in response to the user's movement and display the moved content on the display while maintaining a viewing angle.

As an example, at least one processor, individually and/or collectively, may be configured to cause the wearable device to: based on there being multiple contents including the user lock attribute, group the multiple contents into one group; and move the group relative to the environment according to the user's movement.

As an example, the wearable device may further include a sensor. At least one processor, individually and/or collectively, may be configured to cause the wearable device to: determine the user's posture, based on a signal detected through the sensor; and based on a first posture and a second posture as the user's posture being repeated, display the content at a middle position between a first position of the content corresponding to the first posture and a second position of the content corresponding to the second posture.

As an example, a method of displaying content in a wearable device may include: determining a usage environment of the wearable device displaying content; generating a boundary, based on at least one of the number of contents and the usage environment; and displaying the contentplaced based on a shape of the boundary; wherein the boundary may comprise a virtual space including a specified area surrounding at least a part of a user or the wearable device based on the user wearing the wearable device or the wearable device, in which the content is displayed on a surface of the boundary, and the content including a lock attribute is moved on the surface according to the user's posture.

As an example, the generating of the boundary may include, based on the usage environment being an augmented reality (AR) environment and a plane being detected in an actual environment, generating a cuboidal boundary, based on the usage environment being a virtual reality (VR) environment and the number of the contents being equal to or less than a specified first number, generating a cylindrical boundary, and based on the usage environment being a virtual reality (VR) environment and the number of the contents exceeding the specified first number, generating a capsular boundary.

As an example, the method may further include, based on the number of the contents exceeding the specified first number in the AR environment or the number of the contents being changed in the VR environment, changing the generated boundary, based on the number of the contents.

As an example, the method may further include, based on a first boundary being changed to a second boundary, changing a shape of a first content displayed on a curved surface of the first boundary using a curved shape, to a planar shape on a plane of the second boundary, or changing the shape of the first content displayed on a plane of the first boundary using a planar shape, to a curved shape on a curved surface of the second boundary and displaying the changed shape of the first content. The changing and the displaying may include, based on the shape of the first content being changed and displayed, temporarily displaying the first content to which curve has not been applied.

As an example, the displaying of the content may further include, based on the generated boundary being a cuboidal boundary, changing a size of the content and displaying the content in an area of one surface of the cuboidal boundary.

As an example, the method may further include, based on the usage environment being a VR environment, determining an attribute of second content included in the content as a task-related attribute or an environment-related attribute, The displaying of the content may include displaying the content to avoid the second content including the environment-related attribute, or anchoring the content to the second content including the task-related attribute and displaying the anchored content.

As an example, the specified lock attribute may include a user lock attribute. The method may further include configuring the wearable device, to have the user lock attribute, at least one of a control content, content in operation, a frequently used content determined based on the user's usage pattern, content configured by the user, and notification-related content.

As an example, the method may further include anchoring content including the user lock attribute with respect to the user, moving the task content including the user lock attribute relative to an environment in response to the user's movement, and displaying the moved content while maintaining a viewing angle.

As an example, the method may further include, based on there being multiple contents including the user lock attribute, grouping the multiple contents into one group, and moving the group according to the user's movement.

As an example, a non-transitory computer-readable recording medium having, recorded thereon, a program which, when executed by at least one processor of a wearable device, individually and/or collectively, causes the wearable device to perform a method of displaying content including: determining a usage environment of the wearable device displaying content; generating a boundary, based on at least one of the number of contents and the usage environment; and displaying the content placed based on a shape of the boundary; wherein the boundary may be a virtual space which includes a specified area surrounding at least a part of a user or the wearable device based on the user wearing the wearable device or the wearable device, in which the content is displayed on a surface of the boundary, and the content including a lock attribute is moved on the surface according to the user's posture.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various examples of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A wearable device comprising:
a display;
at least one processor comprising processing circuitry; and
memory storing instructions that, whet executed by the at least one processor individually or collectively, cause the wearable device to:
determine a usage environment of the wearable device displaying content;
generate a boundary, based on at least one of a number of contents and the usage environment; and
display, through the display, the content placed based on a shape of the boundary, and
wherein the boundary comprises a virtual space including a specified area surrounding at least a part of a user or the wearable device based on the user wearing the wearable device or the wearable device, in which the content is displayed on a surface of the boundary, and the content including a lock attribute is moved on the surface according to the user's posture.

2. The wearable device of claim 1, wherein the instructions that, when executed by the at least one processor individually or collectively, cause the wearable device to:
based on the usage environment being an augmented reality (AR) environment and a plane being detected in an actual environment, generate a cuboidal boundary;
based on the usage environment being a virtual reality (VR) environment and the number of the contents being equal to or less than a specified first number, generate a cylindrical boundary; and
based on the usage environment being a virtual reality (VR) environment and the number of the contents exceeding the specified first number, generate a capsular boundary.

3. The wearable device of claim 2, wherein the instructions that, when executed by the at least one processor individually or collectively, cause the wearable device to, based on the number of the contents exceeding the specified first number in the AR environment or the number of the contents being changed in the VR environment, change the generated boundary, based on the number of the contents.

4. The wearable device of claim 3, wherein the instructions that, when executed by the at least one processor individually or collectively, cause the wearable device to:
based on a first boundary being changed to a second boundary, change a shape of a first content displayed on a curved surface of the first boundary using a curved shape, to a planar shape on a plane of the second boundary, or change the shape of the first content displayed on a plane of the first boundary using a planar shape, to a curved shape on a curved surface of the second boundary and display the changed shape of the first content on the display; and
based on the shape of the first content being changed and displayed, temporarily display, on the display, the first content to which curve has not been applied.

5. The wearable device of claim 1, wherein the instructions that, when executed by the at least one processor individually or collectively, cause the wearable device to, based on the generated boundary being a cuboidal boundary, change a size of the content and display the content in an area of one surface of the cuboidal boundary.

6. The wearable device of claim 1, wherein the instructions that, when executed by the at least one processor individually or collectively, cause the wearable device to:
based on the usage environment being a VR environment, determine an attribute of second content included in the content as a task-related attribute or an environment-related attribute; and
display the content to avoid the second content including the environment-related attribute, or anchor the content to the second content including the task-related attribute and display the anchored content within or around the second content.

7. The wearable device of claim 1, wherein the specified lock attribute comprises a user lock attribute, and
wherein the instructions that, when executed by the at least one processor individually or collectively, cause the wearable device to have the user lock attribute, at least one of a control content, a content in operation, a frequently used content determined based on the user's usage pattern, content configured by the user, and notification-related content.

8. The wearable device of claim 7, wherein the instructions that, when executed by the at least one processor individually or collectively, cause the wearable device to:
anchor content including the user lock attribute with respect to the user, move the content including the user lock attribute relative to an environment in response to the user's movement, and display the moved content on the display while maintaining a viewing angle.

9. The wearable device of claim 8, wherein the instructions that, when executed by the at least one processor individually or collectively, cause the wearable device to, based on there being multiple contents including the user lock attribute, group the multiple contents into one group, and move the group relative to the environment according to the user's movement.

10. The wearable device of claim 1, further comprising a sensor,
wherein the instructions that, when executed by the at least one processor individually or collectively, cause the wearable device to:
determine the user's posture, based on a signal detected through the sensor; and
based on a first posture and a second posture as the user's posture being repeated, display the content at a middle position between a first position of the content corresponding to the first posture and a second position of the content corresponding to the second posture.

11. A method of displaying content in a wearable device, the method comprising:
determining a usage environment of the wearable device displaying content;
generating a boundary, based on at least one of a number of contents and the usage environment; and
displaying the content placed based on a shape of the boundary,
wherein the boundary comprises a virtual space including a specified area surrounding at least a part of a user or the wearable device based on the user wearing the wearable device or the wearable device, in which the content is displayed on a surface of the boundary, and the content including a lock attribute is moved on the surface according to the user's posture.

12. The method of claim 11, wherein the generating of the boundary comprises:
based on the usage environment being an augmented reality (AR) environment and a plane being detected in an actual environment, generating a cuboidal boundary;
based on the usage environment being a virtual reality (VR) environment and the number of the contents being equal to or less than a specified first number, generating a cylindrical boundary; and
based on the usage environment being a virtual reality (VR) environment and the number of the contents exceeding the specified first number, generating a capsular boundary.

13. The method of claim 12, further comprising, based on the number of the contents exceeding the specified first number in the AR environment or the number of the contents being changed in the VR environment, changing the generated boundary, based on the number of the contents.

14. The method of claim 13, further comprising, based on a first boundary being changed to a second boundary, changing a shape of a first content displayed on a curved surface of the first boundary using a curved shape, to a planar shape on a plane of the second boundary, or changing the shape of the first content displayed on a plane of the first boundary using a planar shape, to a curved shape on a curved surface of the second boundary and displaying the changed shape of the first content,
wherein the changing and the displaying comprises, based on the shape of the first content being changed and displayed, temporarily displaying the first content to which curve has not been applied.

15. The method of claim 11, wherein the displaying of the content further comprises, based on the generated boundary being a cuboidal boundary, changing a size of the content and displaying the content in an area of one surface of the cuboidal boundary.
